(19) **Europäisches Patentamt**
**European Patent Office**
**Office européen des brevets**

(11) **EP 4 489 360 A1**

(12) **EUROPEAN PATENT APPLICATION**
published in accordance with Art. 153(4) EPC

(43) Date of publication:
**08.01.2025 Bulletin 2025/02**

(21) Application number: **22928313.0**

(22) Date of filing: **24.11.2022**

(51) International Patent Classification (IPC):
**H04L 27/34** (2006.01)          **H04L 27/36** (2006.01)
**H04L 27/38** (2006.01)

(52) Cooperative Patent Classification (CPC):
**H04L 27/34; H04L 27/38;** H04L 27/36

(86) International application number:
**PCT/CN2022/134093**

(87) International publication number:
**WO 2023/160053 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 CN 202210190613**

(71) Applicant: **Datang Mobile Communications
Equipment Co., Ltd.
Beijing 100085 (CN)**

(72) Inventor: **JIN, Liqiang
Beijing 100085 (CN)**

(74) Representative: **Studio Torta S.p.A.
Via Viotti, 9
10121 Torino (IT)**

(54) **MAPPING METHOD FOR PROBABILISTIC SHAPING AND RECEPTION PROCESSING
METHOD FOR PROBABILISTIC DE-SHAPING**

(57)    Provided in the embodiments of the present disclosure are a mapping method for probabilistic shaping and a reception processing method for probabilistic de-shaping. The mapping method comprises: on the basis of a target amplitude probability distribution and a bit to be shaped, acquiring a shaping amplitude bit by means of a first decoder, which is dedicated to a channel code; and mapping the shaping amplitude bit to form a modulation constellation point. In the embodiments of the present disclosure, decoding can be performed according to a target amplitude probability distribution and by means of a first decoder, which is dedicated to a channel code, such that a shaping amplitude bit is acquired, and the shaping amplitude bit is enabled to be close to the target amplitude probability distribution, thereby realizing a relatively small rate loss and a relatively low shaping complexity.

Obtaining a shaped amplitude bit through a first decoder dedicated to a channel code based on a target amplitude probability distribution and a to-be-shaped bit — 301

Mapping the shaped amplitude bit to a modulation constellation point — 302

FIG. 3

EP 4 489 360 A1

**Description**

CROSS-REFERENCES TO RELATED APPLICATIONS

The present application claims priority to Chinese patent application No. 202210190613.0 filed on February 28, 2022, entitled "Mapping Method for Probabilistic Shaping and Reception Processing Method for Probabilistic De-Shaping", which is hereby incorporated by reference in its entirety.

FIELD

The present application relates to the field of radio communication, and in particular, to a method for mapping probability shaping and a method for receiving and processing probability de-shaping.

BACKGROUND

With the emergence of new technologies such as new frequency bands, ultra large scale and distributed antennas, as well as intelligent reflecting surfaces, a receiving signal-to-noise ratio in future communication systems is expected to be further improved. Therefore, it is required to design constellation diagrams with higher modulation orders to enhance bit rate. However, under high signal-to-noise ratio and high spectral efficiency, same probability based rectangular quadrature amplitude modulation (QAM) constellation modulation has a problem of significant shaping loss, and a constellation shaping technology needs to be introduced to avoid the loss.

When a code block of a shaped code for constellation shaping is short, a constellation probability shaping scheme based on constant composition distribution matching (CCDM) has a problem of significant rate loss, while a constellation probability shaping scheme based on enumeration sphere shaping (ESS) has a problem of higher storage complexity.

BRIEF SUMMARY

Embodiments of the present application provide a method for mapping probability shaping and a method for receiving and processing probability de-shaping, to solve defects of significant rate loss or high storage complexity in constellation probability shaping in the related art, and to obtain smaller rate loss and lower shaping complexity.

An embodiment of the present application provides a method for mapping probability shaping, applied to a transmitter, including:

obtaining a shaped amplitude bit through a first decoder dedicated to a channel code based on a target amplitude probability distribution and a to-be-shaped bit; and

mapping the shaped amplitude bit to a modulation constellation point.

In an embodiment, in case that the channel code is a binary channel code, obtaining the shaped amplitude bit through the first decoder dedicated to the channel code based on the target amplitude probability distribution and the to-be-shaped bit includes:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to each of the multiple bit layers.

In an embodiment, obtaining, based on the target amplitude probability distribution and the to-be-shaped bit, the decoded codeword corresponding to each of the multiple bit layers through the first decoder corresponding to each of the multiple bit layers includes:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

In an embodiment, obtaining the decoded codeword corresponding to each of the multiple bit layers based on the first decoder corresponding to each of the multiple bit layers and the syndrome corresponding to each of the multiple bit layers includes:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, determining the code rate corresponding to each of the multiple bit layers based on the target amplitude probability distribution includes:

determining entropy corresponding to an amplitude bit of each of the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, obtaining the shaped amplitude bit through the first decoder dedicated to the channel code based on the target amplitude probability distribution and the to-be-shaped bit includes:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, determining the code rate of the nonbinary channel code based on the target amplitude probability distribution includes:

determining entropy corresponding to all amplitude bits based on the target amplitude probability distribution; and determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, mapping the shaped amplitude bit to the modulation constellation point includes: mapping the shaped amplitude bit and a target polarity bit to the modulation constellation point.

In an embodiment, before mapping the shaped amplitude bit to the modulation constellation point, the method further includes:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, determining the target polarity bit based on the first polarity bit and the shaped amplitude bit includes:

performing forward error-correction encoding on the first polarity bit and the shaped amplitude bit to obtain a first check bit; and

performing serial-to-parallel conversion on the first check bit and the first polarity bit to obtain the target polarity bit.

In an embodiment, before obtaining the shaped amplitude bit through the first decoder dedicated to the channel code based on the target amplitude probability distribution and the to-be-shaped bit, the method further includes:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

An embodiment of the present application further provides a method for receiving and processing probability de-shaping, applied to a receiver, including:

de-shaping a received signal,

where a shaped amplitude bit corresponding to the received signal is obtained by a first decoder dedicated to a channel code based on a target amplitude probability distribution and a to-be-shaped bit.

In an embodiment, de-shaping the received signal includes:

inputting the received signal into a demodulator to obtain demodulation information; and

inputting the demodulation information into a forward error-correction decoder to obtain the shaped amplitude bit and a first polarity bit; and

inputting the shaped amplitude bit into a de-shaper to obtain the to-be-shaped bit.

In an embodiment, inputting the shaped amplitude bit into the de-shaper to obtain the to-be-shaped bit includes: in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.

In an embodiment, inputting the shaped amplitude bit into the de-shaper to obtain the to-be-shaped bit includes: in case that the shaped amplitude bit is a soft-value bit, inputting the shaped amplitude bit into the de-shaper to obtain the to-be-shaped bit, where the de-shaper includes a second decoder for the channel code, and the to-be-shaped bit is a soft-value bit corresponding to a syndrome of the channel code.

In an embodiment, de-shaping the received signal includes:

demodulating and de-shaping the received signal to obtain a second encoded codeword; and

inputting the second encoded codeword into a forward error-correction decoder to obtain the target transmission bit.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a second decoder for the channel code, and the second encoded codeword is a soft-value bit corresponding to a syndrome of the channel code.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a third decoder for the channel code, and the second encoded codeword is a hard-value bit corresponding to a syndrome of the channel code.

In an embodiment, de-shaping the received signal includes:
obtaining a target transmission bit corresponding to the received signal based on a Turbo iteration process among the demodulator, the de-shaper and the forward error-correction decoder.

An embodiment of the present application further provides a transmitter, including a memory, a transceiver and a processor,

where the memory is used for storing a computer program; the transceiver is used for transmitting and receiving data under control of the processor; and the processor is used for reading the computer program in the memory and performing the following operations:

obtaining a shaped amplitude bit through a first decoder dedicated to a channel code based on a target amplitude probability distribution and a to-be-shaped bit; and

mapping the shaped amplitude bit to a modulation constellation point.

In an embodiment, in case that the channel code is a binary channel code, obtaining the shaped amplitude bit through the first decoder dedicated to the channel code based on the target amplitude probability distribution and the to-be-shaped bit includes:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to each of the multiple bit layers.

In an embodiment, obtaining, based on the target amplitude probability distribution and the to-be-shaped bit, the decoded codeword corresponding to each of the multiple bit layers through the first decoder corresponding to each of the multiple bit layers includes:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

In an embodiment, obtaining the decoded codeword corresponding to each of the multiple bit layers based on the first decoder corresponding to each of the multiple bit layers and the syndrome corresponding to each of the multiple bit layers includes:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, determining the code rate corresponding to each of the multiple bit layers based on the target amplitude probability distribution includes:

determining entropy corresponding to an amplitude bit of each layer of the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, obtaining the shaped amplitude bit through the first decoder dedicated to the channel code based on the target amplitude probability distribution and the to-be-shaped bit includes:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, determining the code rate of the nonbinary channel code based on the target amplitude probability distribution includes:

determining entropy corresponding to all amplitude bits based on the target amplitude probability distribution; and determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, mapping the shaped amplitude bit to the modulation constellation point includes:
mapping the shaped amplitude bit and a target polarity bit to the modulation constellation point.
In an embodiment, before mapping the shaped amplitude bit and the target polarity bit to the modulation constellation point, the operations further include:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, determining the target polarity bit based on the first polarity bit and the shaped amplitude bit includes:

performing forward error-correction encoding on the first polarity bit and the shaped amplitude bit to obtain a first check bit; and

performing serial-to-parallel conversion on the first check bit and the first polarity bit to obtain the target polarity bit.

In an embodiment, before obtaining the shaped amplitude bit through the first decoder dedicated to the channel code based on the target amplitude probability distribution and the to-be-shaped bit, the operations further include:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

An embodiment of the present application further provides a receiver, including a memory, a transceiver and a processor,
where the memory is used for storing a computer program; the transceiver is used for transmitting and receiving data under control of the processor; and the processor is used for reading the computer program in the memory and performing the following operations:

de-shaping a received signal,

where a shaped amplitude bit corresponding to the received signal is obtained by a first decoder dedicated to a channel code based on a target amplitude probability distribution and a to-be-shaped bit.

In an embodiment, de-shaping the received signal includes:

inputting the received signal into a demodulator to obtain demodulation information; and

inputting the demodulation information into a forward error-correction decoder to obtain the shaped amplitude bit and a first polarity bit; and

inputting the shaped amplitude bit into a de-shaper to obtain the to-be-shaped bit.

In an embodiment, inputting the shaped amplitude bit into the de-shaper to obtain the to-be-shaped bit includes: in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.
In an embodiment, inputting the shaped amplitude bit into the de-shaper to obtain the to-be-shaped bit includes: in case that the shaped amplitude bit is a soft-value bit, inputting the shaped amplitude bit into the de-shaper to obtain the to-be-shaped bit, where the de-shaper includes a second decoder for the channel code, and the to-be-shaped bit is a soft-value bit corresponding to a syndrome of the channel code.
In an embodiment, de-shaping the received signal includes:

demodulating and de-shaping the received signal to obtain a second encoded codeword; and

inputting the second encoded codeword into a forward error-correction decoder to obtain the target transmission bit.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a second decoder for the channel code, and the second encoded codeword is a soft-value bit corresponding to a syndrome of the channel code.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a third decoder for the channel code, and the second encoded codeword is a hard-value bit corresponding to a syndrome of the channel code.

In an embodiment, de-shaping the received signal includes:
obtaining a target transmission bit corresponding to the received signal based on a Turbo iteration process among the demodulator, the de-shaper and the forward error-correction decoder.
An embodiment of the present application further provides an apparatus for mapping probability shaping, applied to a transmitter, including:

a first obtaining unit, used for obtaining a shaped amplitude bit through a first decoder dedicated to a channel code based on a target amplitude probability distribution and a to-be-shaped bit; and
a second obtaining unit, used for mapping the shaped amplitude bit to a modulation constellation point.

In an embodiment, in case that the channel code is a binary channel code, the first obtaining unit is further used for:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to each of the multiple bit layers.

In an embodiment, the first obtaining unit is further used for:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers; and

obtaining the shaped amplitude bit based on the decoded codeword corresponding to each of the multiple bit layers.

In an embodiment, the first obtaining unit is further used for:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, the first obtaining unit is further used for:

determining entropy corresponding to an amplitude bit of each layer in the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, the first obtaining unit is further used for:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, the first obtaining unit is further used for:

determining entropy corresponding to all amplitude bits based on the target amplitude probability distribution; and

determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, the second obtaining unit is further used for:
mapping the shaped amplitude bit and a target polarity bit to the modulation constellation point.
In an embodiment, the apparatus further includes a third obtaining unit, where before mapping the shaped amplitude bit to the modulation constellation point, the third obtaining unit is used for:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, the third obtaining unit is further used for:

performing forward error-correction encoding on the first polarity bit and the shaped amplitude bit to obtain a first check

EP 4 489 360 A1

bit; and

performing serial-to-parallel conversion on the first check bit and the first polarity bit to obtain the target polarity bit.

In an embodiment, the apparatus further includes a fourth obtaining unit, where before obtaining the shaped amplitude bit through the first decoder dedicated to the channel code based on the target amplitude probability distribution and the to-be-shaped bit, the fourth obtaining unit is used for:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

In an embodiment, the apparatus further includes a determining unit, where before obtaining the shaped amplitude bit through the first decoder dedicated to the channel code based on the target amplitude probability distribution and the to-be-shaped bit, the determining unit is used for:
determining the target amplitude probability distribution based on a target signal-to-noise ratio (SNR) and a target modulation order.
An embodiment of the present application further provides an apparatus for receiving and processing probability de-shaping, applied to a receiver, including:

a fifth obtaining unit, used for de-shaping a received signal,

where a shaped amplitude bit corresponding to the received signal is obtained by a first decoder dedicated to a channel code based on a target amplitude probability distribution and a to-be-shaped bit, where a shaper includes the first decoder, and a syndrome of a channel code corresponding to the first decoder is determined based on the to-be-shaped bit.

In an embodiment, the fifth obtaining unit is further used for:

inputting the received signal into a demodulator to obtain demodulation information; and

inputting the demodulation information into a forward error-correction decoder to obtain the shaped amplitude bit and a first polarity bit; and

inputting the shaped amplitude bit into the de-shaper to obtain the to-be-shaped bit; and

determining the target transmission bit based on the to-be-shaped bit and the first polarity bit.

In an embodiment, the fifth obtaining unit is further used for:
in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.
In an embodiment, the fifth obtaining unit is further used for:
in case that the shaped amplitude bit is a soft-value bit, inputting the shaped amplitude bit into the de-shaper to obtain the to-be-shaped bit, where the de-shaper includes a second decoder for the channel code, and the to-be-shaped bit is a soft-value bit corresponding to a syndrome of the channel code.
In an embodiment, the fifth obtaining unit is further used for:

demodulating and de-shaping the received signal to obtain a second encoded codeword; and

inputting the second encoded codeword into a forward error-correction decoder to obtain the target transmission bit.

In an embodiment, the fifth obtaining unit is further used for:

inputting the received signal into a demodulator to obtain demodulation information; and

in case that the demodulation information is a soft-value bit, inputting the demodulation information into a de-shaper to obtain the second encoded codeword, where the de-shaper includes a second decoder for the channel code, and the second encoded codeword is a soft-value bit corresponding to a syndrome of the channel code.

In an embodiment, the fifth obtaining unit is further used for:

inputting the received signal into a demodulator to obtain demodulation information; and

in case that the demodulation information is a soft-value bit, inputting the demodulation information into a de-shaper to obtain the second encoded codeword, where the de-shaper includes a third decoder for the channel code, and the second encoded codeword is a hard-value bit corresponding to a syndrome of the channel code.

In an embodiment, the fifth obtaining unit is further used for:
obtaining a target transmission bit corresponding to the received signal based on a Turbo iteration process among the demodulator, the de-shaper and the forward error-correction decoder.
An embodiment of the present application further provides a processor-readable storage medium having a computer program for causing a processor stored thereon, where the computer program is used to cause the processor to perform steps of the method for mapping probability shaping described above, or steps of the method for receiving and processing probability de-shaping described above.
In the method for mapping probability shaping and the method for receiving and processing probability de-shaping provided by the embodiments of the present application, decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

BRIEF DESCRIPTION OF THE DRAWINGS

To illustrate the solutions disclosed in embodiments of the present application or in the related art more clearly, the drawings used in the description of the embodiments are briefly described below. The drawings in the following description are only some embodiments of the present application, and other drawings may be obtained according to these drawings without creative effort for those skilled in the art.

FIG. 1 is a schematic diagram of a rear de-shaping probability amplitude shaping (PAS) architecture according to the related art;

FIG. 2 is a schematic diagram of 8-ASK binary index labeling according to the related art;

FIG. 3 is a first flowchart of a method for mapping probability shaping according to an embodiment of the present application;

FIG. 4 is a second flowchart of a method for mapping probability shaping according to an embodiment of the present application;

FIG. 5 is a third flowchart of a method for mapping probability shaping according to an embodiment of the present application;

FIG. 6 is a schematic diagram of a front de-shaping PAS architecture according to an embodiment of the present application;

FIG. 7 is a first flowchart of a method for receiving and processing probability de-shaping according to an embodiment of the present application;

FIG. 8 is a second flowchart of a method for receiving and processing probability de-shaping according to an embodiment of the present application;

FIG. 9 is a schematic diagram of a belief propagation decoder based on a Tanner graph according to an embodiment of the present application;

FIG. 10 is a first schematic structural diagram of a network side device according to an embodiment of the present application;

FIG. 11 is a first schematic structural diagram of a terminal according to an embodiment of the present application;

FIG. 12 is a second schematic structural diagram of a network side device according to an embodiment of the present application;

FIG. 13 is a second schematic structural diagram of a terminal according to an embodiment of the present application;

FIG. 14 is a schematic structural diagram of an apparatus for mapping probability shaping according to an embodiment of the present application; and

FIG. 15 is a schematic structural diagram of an apparatus for receiving and processing probability de-shaping according to an embodiment of the present application.

DETAILED DESCRIPTION

To clearly illustrate the various embodiments of the present application, some relevant background knowledge is first introduced as follows.

In high-order modulation systems with limited bandwidth, compared to same probability based rectangular quadrature amplitude modulation (QAM), a total gain of the system may be obtained through encoding gain and shaping gain. The encoding gain is mainly determined by distance spectrum characteristics of channel encoding, and the shaping gain depends on design of a modulation constellation diagram. By designing an optimal constellation diagram, a communication system may achieve approximately 1.53 dB asymptotic gain under high spectral efficiency and high signal-to-noise ratio.

Constellation shaping is a technology that modifies a distance or probability of constellation points to approach an optimal input distribution of the channel. High-order modulation systems with limited bandwidth may obtain shaping gains based on constellation shaping technology. The constellation shaping is mainly divided into the following modes.

(1) Geometric shaping (GS)

GS assumes that each constellation point is used with same probability. By finding a position of an optimal constellation point or designing unequal spacing distances between constellation points, the geometric shape of the signal constellation is similar to a hypersphere.

(2) Probability shaping (PS)

PS assumes that each constellation point is equidistant. By adopting signal superposition and a shaper to modify usage probabilities of these rectangular QAM equidistant constellation points, optimal input distributions of the transmitted signal and the channel approach.

According to dimensional division, GS and PS may further be divided into one-dimensional shaping and multidimensional shaping.

(1) One-dimensional shaping

In one-dimensional shaping, only constellation points in one resource element (RE) are considered, so it is only necessary to modify coordinate distance of constellation points on one complex plane or usage probabilities of rectangular QAM constellation points on one complex plane.

(2) Multidimensional shaping

In multidimensional shaping, constellation points on multiple REs are taken as one complex vector/sequence, and a geometric shape of the complex vector/sequence constellation points in a high-dimensional space, or usage probabilities of rectangular QAM constellation points in the high-dimensional space are jointly modified.

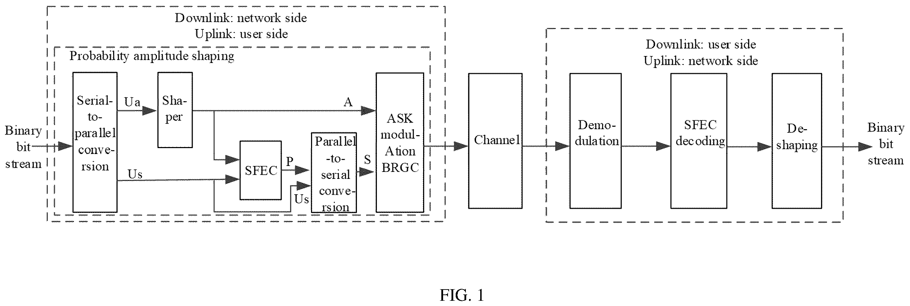

FIG. 1 is a schematic diagram of a rear de-shaping probability amplitude shaping (PAS) architecture according to the related art. As shown in FIG. 1, the de-shaper is located behind a channel decoder. In the scheme of rear de-shaping PAS architecture, the complex QAM constellation is treated as two channels of real amplitude shift keying (ASK) modulation, and positive and negative polarities of the ASK constellation point is decoupled with the amplitude. Only the probability of ASK amplitude occurrences needs to be modified, and the same probability of independent positive and negative polarities do not need to be modified.

64-QAM modulation is taken as an example. Constellation modulation is decomposed into two channels of 8-ASK. A binary index of 8-ASK is labeled with three bits of binary reflected gray code (BRGC).

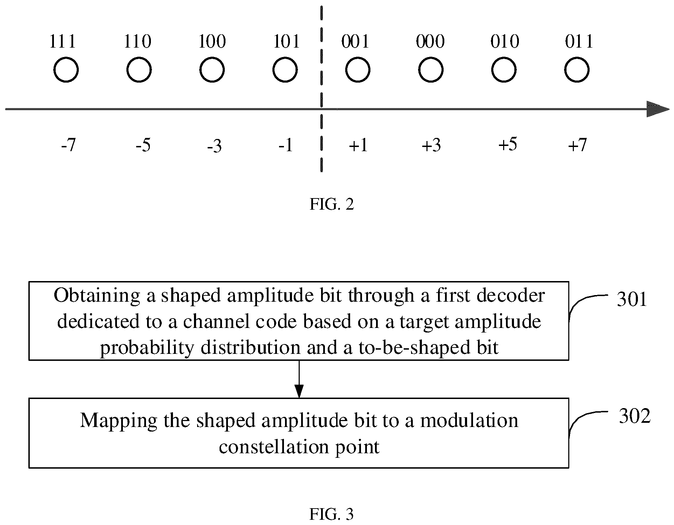

FIG. 2 is a schematic diagram of 8-ASK binary index labeling according to the related art. As shown in FIG. 2, from the binary labeling, it may be seen that the highest bit represents positive and negative polarity, and the lower two bits represent amplitude and are bilateral symmetry.

In a PAS scheme, by performing serial-to-parallel conversion, a transmitter divides a to-be-transmitted binary bit stream into two parts: Ua and Us. A shaped amplitude bit A is obtained from Ua through the shaper. Us and A are used as a system bit input for a systematic forward error-correction code (SFEC). A check bit P for SFEC is obtained after encoding. Us and P are combined to form a polarity bit S. A and S uniquely determine the ASK constellation point. When Us is an empty set, the check bit P is directly obtained by encoding the amplitude bit A with SFEC.

A receiver first demodulates a received signal to obtain demodulation information, and then obtains a transmission bit through SFEC decoding and shaping. This scheme adopts a rear de-shaping module, without requiring a shaped code to support soft detection. In the entire PAS system, SFEC may be designed based on any systemic channel error-correction code, and the shaper is the key of design for the entire system, which is usually implemented based on constant composition distribution matching (CCDM) or enumerative sphere shaping (ESS) shaped codes. The following is an introduction to a CCDM-based shaper and an ESS-based shaper.

(1) CCDM-based shaper

A target amplitude probability distribution $P_A$ is given. The CCDM-based shaper maps a binary bit stream to a sequence $C = C_1 C_2 \ldots C_n$ having a length of n and based on, for example, arithmetic coding. An empirical distribution of the sequence C is $P_c(x) = \frac{n_x(c)}{n}$, where $n_x(c)$ represents the number of occurrences of x in the sequence C, $n_x(c) = \lfloor P_A(x) \cdot n \rfloor$ or $n_x(c) = \lceil P_A(x) \cdot n \rceil$, and a rounding mode may be determined by solving a minimum entropy difference $D(P_c \| P_A)$. For example, $P_A = [P_A(a_1), \ P_A(a_2), \ P_A(a_3), \ P_A(a_4)] = [\frac{1}{4}, \ \frac{1}{4}, \ \frac{2}{4}, 0]$, n = 4, then $n_{a_1} = 1$, $n_{a_2} = 1$, $n_{a_3} = 2$, $n_{a_4} = 0$, and there are a total of $C_4^1 C_3^1 C_2^2 = 12$ sequences C that satisfy the distribution (C = $a_3 a_3 a_1 a_2$, C = $a_3 a_3 a_2 a_1$, C = $a_1 a_3 a_3 a_2$, C = $a_2 a_3 a_3 a_1$ ...), where sequence C may load $k = \lfloor \log_2 12 \rfloor$-bit information, and the rate loss is $R_{loss} = H(A) - \frac{k}{n}$, H(.) indicating the calculation of information entropy. When n is small, the number of sequences C that satisfies the empirical distribution is much smaller than $n \cdot H(A)$, so CCDM-based shaper will result in larger rate loss $R_{Loss}$.

(2) ESS-based shaper

The ESS-based shaper maps a binary bit stream to a sequence $C = C_1 C_2 \ldots C_n$ of length n, where the sequence satisfies an energy constraint condition $\sum_{i=1}^{n} c_i^2 \leq E_{max}$. The sequences C that satisfy the ESS constraint condition are much more than the sequences C that satisfy the CCDM constraint condition, and are closer to $n \cdot H(A)$. Therefore, the ESS-based shaper has relatively small rate loss $R_{Loss}$. For all sequences C that satisfy the energy constraint (points within a high-dimensional sphere), index numbers may be described through a look up table (LUT) or bounded energy trellis (BET) to achieve probability shaping. The shaping process of the ESS-based shaper is as follows:

determining $E_{max}$ and n, and establishing LUT or BET;

calculating an index value i based on an input binary bit stream; and

searching a sequence C with the index value i to obtain a shaped output by using LUT or BET path backtracking.

The space/storage complexity of this algorithm is O(L(n + 1)nR), $L = \frac{E_{max} - N}{8} + 1$ , and the computational complexity is O(|A|nR). It may be seen that the computational complexity of the ESS-based shaper increases linearly with respect to n, and the computational complexity is relatively low. However, the storage complexity increases quadratically with respect to n, and the storage complexity is relatively high when n is large.

It should be noted that the CCDM-based shaper or the ESS-based shaper usually do not support soft input and soft output, and a rear de-shaping PAS architecture is required to be combined.

When a code block of the shaped code is short, a traditional CCDM-based shaper has significant rate loss, and the ESS-based shaper overcomes the disadvantage of rate loss. However, when the code block of the shaped code is large, its storage complexity is high, which is not conducive to the actual deployment of communication systems.

To overcome above shortcomings, embodiments of the present application provide a method for mapping probability shaping and a method for receiving and processing probability de-shaping. Decoding may be performed based on a target amplitude probability distribution through a first decoder dedicated to a channel code. Probability shaping is performed to obtain small rate loss and lower shaping complexity.

In embodiments of the present application, the term "and/or" describes a related relationship of associated objects, and indicates that there may be three kinds of relationships. For example, A and/or B may represent that A exists alone, A and B exist simultaneously, and B exists alone. Character "|" generally indicates that the associated objects have an "or" relationship.

In embodiments of the present application, the term "multiple" refers to two or more than two, and other quantifiers are similar.

The solutions in embodiments of the present application are clearly and completely described in the following with reference to the accompanying drawings in embodiments of the present application. These embodiments are only a part of embodiments of the present application, and not all of the embodiments. All other embodiments obtained by a person of ordinary skill in the art based on embodiments of the present application without any creative work belong to the scope of the present application.

The solutions according to embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in embodiments of the present application.

The network device in embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

FIG. 3 is a first flowchart of a method for mapping probability shaping according to an embodiment of the present application. As shown in FIG. 3, an embodiment of the present application provides a method for mapping probability shaping, which may be performed by a transmitter. The method includes the following steps.

Step 301: obtaining a shaped amplitude bit through a first decoder dedicated to a channel code based on a target amplitude probability distribution and a to-be-shaped bit.

In an embodiment, the transmitter may obtain the target transmission bit, determine the to-be-shaped bit based on the target transmission bit, and perform probability shaping to the to-be-shaped bit through the first decoder dedicated to the channel code to obtain the shaped amplitude bit corresponding to the to-be-shaped bit.

In an embodiment, the target transmission bit may be information on which constellation modulation is to be performed, and the modulation constellation point corresponding to the target transmission bit may be obtained after constellation modulation is performed.

Step 302: mapping the shaped amplitude bit to a modulation constellation point.

In an embodiment, after obtaining the target transmission bit, the transmitter may determine the target polarity bit based on the target transmission bit, and then perform mapping based on the target polarity bit and the shaped amplitude bit to uniquely determine the modulation constellation point.

In an embodiment, in a downlink scenario, the transmitter may be a network side device, such as a base station, and correspondingly, the receiver may be a terminal.

In an embodiment, in an uplink scenario, the transmitter may be a terminal, such as a mobile phone, and the receiver may be a network side device.

In an embodiment, the transmitter may include a shaper. The shaper may include a first decoder for the channel code. The first decoder may perform decoding calculation by taking a corresponding syndrome of the first decoder as an input to obtain a decoded codeword. The shaped amplitude bit may be obtained based on the decoded codeword.

For example, the channel code may be a binary polar code, and the shaper may include a first decoder for the binary polar code.

For example, the channel code may be a nonbinary polar code, and the shaper may include a first decoder for the nonbinary polar code.

For example, the channel code may be a binary low density parity check (LDPC) code, and the shaper may include a first decoder for the binary LDPC code.

For example, the channel code may be a nonbinary LDPC code, and the shaper may include a first decoder for the nonbinary LDPC code.

For example, the transmitter may be implemented based on the rear de-shaping PAS architecture. The transmitter may input the to-be-shaped bit as a syndrome of the channel code into the shaper based on the target amplitude probability distribution to obtain the shaped amplitude bit, and then obtain the modulation constellation point based on the shaped amplitude bit and the target polarity bit.

It should be noted that the above examples are only for illustrative purposes of embodiments of the present application and are not intended to limit the scope of embodiments of the present application.

To overcome the defect that the shaper does not support soft input and soft output, and may only be combined with a rear de-shaping PAS architecture, the shaped code constructed through the channel code in embodiments of the present application may support soft input, soft output and de-shaping, and is suitable for various de-shaping PAS architectures.

In the method for mapping probability shaping provided by embodiments of the present application, decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

In an embodiment, in case that the channel code is a binary channel code, obtaining the shaped amplitude bit through the first decoder dedicated to the channel code based on the target amplitude probability distribution and the to-be-shaped bit includes:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to the multiple bit layers.

In an embodiment, the channel code may be a binary channel code, and the shaper of the transmitter may include multiple bit layers, each of the multiple bit layers may correspond to a first decoder.

In an embodiment, the transmitter may determine the to-be-shaped bit based on the target transmission bit, and then input the to-be-shaped bit into the shaper. The transmitter may obtain, based on the target amplitude probability distribution and the to-be-shaped bit, the decoded codeword corresponding to each of the multiple bit layers through the first decoder corresponding to each of the multiple bit layers. The shaped amplitude bit may be obtained based on the decoded codeword corresponding to each of the multiple bit layers. The modulation constellation point may be uniquely determined based on the shaped amplitude bit and the target polarity bit.

In an embodiment, the multiple bit layers may be determined based on a binary label of a constellation modulation symbol.

For example, 64-QAM modulation may be divided into two channels of 8-ASK modulation. Each 8-ASK modulation symbol may have a corresponding 3-bit sequence A1A2A3. One of these 3 bits may be the target polarity bit (e.g., A1), and the multiple bit layers may be bit layer A2 and bit layer A3.

Therefore, the channel code may be a binary channel code, and the shaper of the transmitter may include multiple bit layers, each of the multiple bit layers may correspond to a first decoder. The decoding may be performed based on the target amplitude probability distribution through the first decoder in the shaper, and then the shaped amplitude bit may be obtained, the shaped amplitude bit may approach the target amplitude probability distribution, probability shaping as well as small rate loss and low shaping complexity is provided. Under high signal-to-noise ratio and high spectral efficiency, shaping loss may be effectively reduced, and communication system performance may be improved.

In an embodiment, obtaining, based on the target amplitude probability distribution and the to-be-shaped bit, the decoded codeword corresponding to each of the multiple bit layers through the first decoder corresponding to each of the multiple bit layers includes:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

In an embodiment, the channel code may be a binary channel code, and the shaper of the transmitter may include multiple bit layers, each of the multiple bit layers may correspond to a first decoder.

In an embodiment, the transmitter may determine the to-be-shaped bit based on the target transmission bit, and then input the to-be-shaped bit into the shaper. The corresponding code rate of each of the multiple bit layers may be determined based on the target amplitude probability distribution, may determine the corresponding syndrome of each of the multiple bit layers based on the to-be-shaped bit and the corresponding code rate of each of the multiple bit layers, may obtain the decoded codeword corresponding to each of the multiple bit layers based on the first decoder corresponding to each of the multiple bit layers and the corresponding syndrome of each of the multiple bit layers, may obtain the shaped amplitude bit based on the decoded codeword corresponding to each of the multiple bit layers, and may uniquely determine the modulation constellation point based on the shaped amplitude bit and the target polarity bit.

For example, the channel code may be a binary polar code, and the shaper of the transmitter may include multiple bit layers, each of the multiple bit layers may correspond to a first decoder for a binary polar code.

For example, the channel code may be a binary LDPC code, and the shaper of the transmitter may include multiple bit layers, each of the multiple bit layers may correspond to a first decoder for a binary LDPC code.

It should be noted that the above examples are only for illustrative purposes of embodiments of the present application and are not intended to limit the scope of embodiments of the present application.

In an embodiment, by modifying the code rate of each bit layer, the shaping rate loss may be reduced, and the shaper of the transmitter may use channel codes that support low decoding complexity (such as the polar code and the LDPC code), and shaping complexity is reduced. Therefore, the channel code may be a binary channel code, the shaper of the transmitter may include multiple bit layers, and each of the multiple bit layers may correspond to a first decoder.

Decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

In an embodiment, obtaining the decoded codeword corresponding to each of the multiple bit layers based on the first decoder corresponding to each of the multiple bit layers and the syndrome corresponding to each of the multiple bit layers includes:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, the transmitter may determine the to-be-shaped bit based on the target transmission bit, and then input the to-be-shaped bit into the shaper. The corresponding code rate of each of the multiple bit layers may be determined based on the target amplitude probability distribution. The corresponding syndrome of each of the multiple bit layers may be determined based on the to-be-shaped bit and the corresponding code rate of each of the multiple bit layers.

In an embodiment, after determining the corresponding syndrome of each of the multiple bit layers, the transmitter may input the syndrome corresponding to the first bit layer among the multiple bit layers into the first decoder corresponding to the first bit layer, thereby obtaining the decoded codeword corresponding to the first bit layer. For each target bit layer among the multiple bit layers, the syndrome corresponding to the target bit layer and the first decoded codeword may be input into the first decoder corresponding to the target bit layer to obtain the decoded codeword corresponding to the target bit layer.

In an embodiment, after obtaining the decoded codeword corresponding to each of the multiple bit layers, the shaped amplitude bit may be obtained based on the decoded codeword corresponding to each of the multiple bit layers, and then the modulation constellation point may be uniquely determined based on the shaped amplitude bit and the target polarity bit.

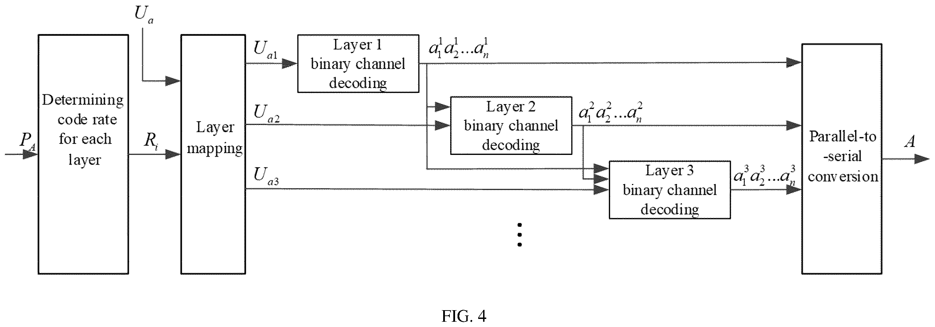

FIG. 4 is a second flowchart of a method for mapping probability shaping according to an embodiment of the present application. FIG. 4 is an optional example of the present application, but does not serve as a limitation of the present application.

As shown in FIG. 4, in case that the channel code is a binary channel code, the shaper may divide the shaped amplitude bit A into binary bits $A = A_1 A_2 \ldots A_{m-1}$, and assign a code rate $R_i$ to each bit layer based on certain criteria (such as information entropy). A channel code with a code rate of $R_i$ and a corresponding decoder are assigned to each bit layer.

The input bit Ua of the shaper is layer-mapped based on the number of bits each bit layer may carry, and is divided into Ua1, Ua2, Ua3, and so on. For the i-th bit layer, Uai is taken as a syndrome, and is input to a channel code decoder of layer i and the soft bit of the decoder of layer i perform calculation based on the target amplitude probability distribution condition $P_{A_i|A_1 A_2 ..A_{i-1}}$. $A_1 A_2 \ldots A_{i-1}$ is the decoding result of the first (i-1) layers. The decoded codeword of each layer is obtained by the shaper in a layer-by-layer decoding manner. For example, the decoded codeword in layer 1 may be $a_1^1 a_2^1 \ldots a_n^1$, the decoded codeword in layer 2 may be $a_1^2 a_2^2 \ldots a_n^2$, the decoded codeword in layer 3 may be $a_1^3 a_2^3 \ldots a_n^3$, and so on. Finally, all bit layer codewords are performed with parallel-to-serial conversion and output as the shaped amplitude bit A.

In an embodiment, during the shaping process of the shaper, the information bit is loaded onto the syndrome of the channel code. As the soft bit of the decoder is calculated layer by layer based on the target amplitude probability distribution $P_A$, each obtained codeword will approach the conditional target amplitude probability distribution $P_{A_i|A_1 A_2 ..A_{i-1}}$, and the shaped amplitude bit A will also approach the target amplitude probability distribution $P_A$.

Therefore, the channel code may be a binary channel code, and the shaper of the transmitter may include multiple bit layers, each of the multiple bit layers may correspond to a first decoder. Decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

In an embodiment, determining the code rate corresponding to each of the multiple bit layers based on the target amplitude probability distribution includes:

determining entropy corresponding to an amplitude bit of each layer in the multiple bit layers based on the target amplitude probability distribution; and

determining the code rate corresponding to each of the multiple bit layers based on entropy corresponding to each of the multiple bit layers.

In an embodiment, the entropy corresponding to the amplitude bit of each bit layer may be determined based on the target amplitude probability distribution, the code rate corresponding to each of the multiple bit layers may be determined based on the entropy corresponding to each of the multiple bit layers, the syndrome corresponding to each of the multiple bit layers may be determined based on the to-be-shaped bit and the code rate corresponding to each of the multiple bit layers, the decoded codeword corresponding to each of the multiple bit layers may be obtained based on the first decoder corresponding to each of the multiple bit layers and the syndrome corresponding to each of the multiple bit layers, the shaped amplitude bit may be obtained based on the decoded codeword corresponding to each of the multiple bit layers, and the modulation constellation point may be uniquely determined based on the shaped amplitude bit and the target polarity bit.

Therefore, the shaper of the transmitter may determine the code rate corresponding to each of the multiple bit layers based on the entropy corresponding to each of the multiple bit layers, determine the syndrome corresponding to each of the multiple bit layers, decode through the first decoder in the shaper based on the target amplitude probability distribution and the syndrome to obtain the shaped amplitude bit, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, in case that the channel code is a nonbinary channel code, obtaining the shaped amplitude bit through the first decoder dedicated to the channel code based on the target amplitude probability distribution and the to-be-shaped bit includes:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, the channel code may be a nonbinary channel code, and the shaper of the transmitter may include a first decoder for the nonbinary channel code.

In an embodiment, the transmitter may determine the to-be-shaped bit based on the target transmission bit, determine the code rate of the nonbinary channel code based on the target amplitude probability distribution, obtain the nonbinary to-be-shaped bit corresponding to the to-be-shaped bit based on the to-be-shaped bit and the code rate of the nonbinary channel code, obtain the nonbinary decoded codeword corresponding to the nonbinary to-be-shaped bit based on the nonbinary to-be-shaped bit and the target amplitude probability distribution, convert the nonbinary decoded codeword into binary decoded codeword to obtain the shaped amplitude bit, and uniquely determine the modulation constellation point based on the shaped amplitude bit and the target polarity bit.

For example, the channel code may be a nonbinary polar code, and the shaper of the transmitter may include a first decoder for the nonbinary polar code.

For example, the channel code may be a nonbinary LDPC code, and the shaper of the transmitter may include a first decoder for the nonbinary LDPC code.

It should be noted that the above examples are only for illustrative purposes of embodiments of the present application and are not intended to limit the scope of embodiments of the present application.

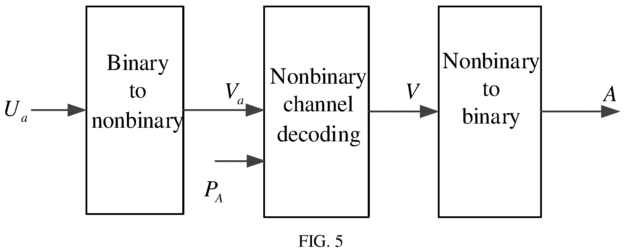

FIG. 5 is a third flowchart of a method for mapping probability shaping according to an embodiment of the present application. FIG. 5 is an optional example of the present application, but does not serve as a limitation of the present application.

As shown in FIG. 5, in case that the channel code is a nonbinary channel code, a bit rate R of a nonbinary channel code may be determined based on certain criteria (such as information entropy), and an information symbol and an information bit that can be loaded may be further determined based on the bit rate R. The shaper no longer requires layer mapping, but instead converts a binary bit stream into a nonbinary symbol $V_a$ and loads the nonbinary symbol onto a nonbinary syndrome. The decoder decodes in a nonbinary manner to obtain a nonbinary codeword V. A soft bit output of the decoder may be calculated based on a target amplitude probability distribution $P_A$, and the final decoded codeword is converted from nonbinary to binary to obtain a shaped amplitude bit A.

In an embodiment, the codeword symbol calculated based on $P_A$, decoded and obtained from a soft bit input will also approach distribution of $P_A$, and probability shaping is obtained. The shaper based on nonbinary code does not require layer by layer serial decoding, resulting in lower shaping latency and suitability for future high throughput service scenarios.

In an embodiment, by modifying the code rate of the nonbinary channel code, the shaping rate loss may be reduced, and when the shaper of the transmitter is able to adopt channel codes that support low decoding complexity (such as a polar code and a LDPC code), the shaping complexity may be reduced.

Therefore, the channel code may be a nonbinary channel code, and the shaper of the transmitter may include a first decoder of the nonbinary channel code. Through the first decoder dedicated to the channel code, decoding may be performed based on the target amplitude probability distribution, the shaped amplitude bit may be obtained, the shaped amplitude bit may approach the target amplitude probability distribution, and probability shaping as well as small rate loss and low shaping complexity is provided. The shaper based on nonbinary code does not require layer by layer serial decoding, resulting in lower shaping latency and suitability for future high throughput service scenarios.

In an embodiment, determining the code rate of the nonbinary channel code based on the target amplitude probability distribution includes:

determining entropy corresponding to all amplitude bits based on the target amplitude probability distribution; and

determining the code rate of the nonbinary channel code based on the entropy corresponding to all amplitude bits.

In an embodiment, the entropy corresponding to all amplitude bits may be determined based on the target amplitude probability distribution, the code rate of the nonbinary channel code may be determined based on the entropy corresponding to all amplitude bits, the nonbinary to-be-shaped bit corresponding to the to-be-shaped bit may be obtained based on the to-be-shaped bit and the code rate of the nonbinary channel code, the nonbinary decoded codeword corresponding to the nonbinary to-be-shaped bit may be obtained based on the nonbinary to-be-shaped bit and the target amplitude probability distribution, the decoded codeword may be converted into binary to obtain the shaped amplitude bit, and the modulation constellation point may be uniquely determined based on the shaped amplitude bit and the target polarity bit.

Therefore, the shaper of the transmitter may determine the code rate of the nonbinary channel code based on the entropy corresponding to all amplitude bits, determine the nonbinary to-be-shaped bit, decode based on the target amplitude probability distribution and the nonbinary to-be-shaped bit through the first decoder in the shaper to obtain the shaped amplitude bit, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, the first decoder includes any one of the following:

a decoder supporting soft input and soft output;

a decoder supporting soft input and hard output; or

a decoder obtained through neural network training.

In an embodiment, the first decoder may be a de-decoder that supports soft input and soft output.

For example, the first decoder may be a belief propagation (BP) decoder. The BP decoder may perform decoding calculation by taking the corresponding syndrome of the BP decoder as an input to obtain the decoded codeword. The shaped amplitude bit may be obtained based on the decoded codeword.

In an embodiment, the first decoder may be a decoder that supports soft input and hard output.

For example, the first decoder may be a list decoder. The list decoder may perform decoding calculation by taking the syndrome corresponding to the list decoder as an input to obtain the decoded codeword. The shaped amplitude bit may be obtained based on the decoded codeword.

In an embodiment, the first decoder may be a decoder obtained through neural network training.

For example, the first decoder may be a BP decoder obtained through deep neural networks (DNN), that is, a DNN-BP decoder. The DNN-BP decoder may perform decoding calculation by taking the corresponding syndrome as an input to obtain the decoded codeword. The shaped amplitude bit may be obtained based on the decoded codeword.

It should be noted that the above examples are only for illustrative purposes of embodiments of the present application and are not intended to limit the scope of embodiments of the present application.

Therefore, the first decoder may be any one of various types of decoders. The first decoder may perform decoding calculation by taking the corresponding syndrome as an input to obtain the decoded codeword. The shaped amplitude bit may be obtained based on the decoded codeword, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, mapping the shaped amplitude bit to the modulation constellation point includes:
mapping the shaped amplitude bit and a target polarity bit to the modulation constellation point.

In an embodiment, after receiving the target transmission bit, the transmitter may determine the target polarity bit based on the target transmission bit, and then perform mapping based on the target polarity bit and the shaped amplitude bit to uniquely determine the modulation constellation point.

Therefore, the modulation constellation point may be uniquely determined by the shaped amplitude bit and the target polarity bit. As the shaped amplitude bit may be obtained by decoding through the first decoder in the shaper based on the target amplitude probability distribution, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, before mapping the shaped amplitude bit to the modulation constellation point, the method further includes:

   obtaining a target transmission bit;

   performing serial-to-parallel conversion on the target transmission bit to obtain the to-be-shaped bit and a first polarity bit; and

   determining the target polarity bit based on the first polarity bit and the shaped amplitude bit.

In an embodiment, the transmitter performs serial-to-parallel conversion on the target transmission bit to obtain the to-be-shaped bit and the first polarity bit.

In an embodiment, the transmitter may determine the to-be-shaped bit based on the target transmission bit, and input the to-be-shaped bit as a syndrome of the channel code into the shaper of the transmitter based on the target amplitude probability distribution to obtain the shaped amplitude bit.

In an embodiment, after obtaining the first polarity bit and the shaped amplitude bit, the transmitter may determine the target polarity bit based on the first polarity bit and the shaped amplitude bit, and then uniquely determine the modulation constellation point based on the shaped amplitude bit and the target polarity bit.

In an embodiment, the transmitter may be implemented based on a rear de-shaping PAS architecture. The transmitter may input the to-be-shaped bit as a syndrome of the channel code into the shaper based on the target amplitude probability distribution to obtain the shaped amplitude bit, and the modulation constellation point may be obtained based on the shaped amplitude bit and the target polarity bit.

In an embodiment, in the rear de-shaping PAS architecture, the transmitter may convert the M-QAM complex constellation modulation into two channels of real $\sqrt{M}\text{-ASK}$ modulation, and calculate the target probability distribution $P_\Omega$, where $\Omega \in \{\pm 1,\ \pm 3,\ \pm 5,\ ...,\ \pm \frac{\sqrt{M}}{2}\}$ of the $\sqrt{M}\text{-ASK}$ modulation based on the signal-to-noise ratio (SNR). $P_\Omega$ may be the optimal probability distribution of the $\sqrt{M}\text{-ASK}$ modulation. The $\sqrt{M}\text{-ASK}$ may use BRGC binary labeling, and the probability distribution $P_\Omega$ may be further decoupled into the target amplitude probability distribution $P_A$ and the target polarity probability distribution $P_S$.

$$P_\Omega = P_A \cdot P_S = P_A \cdot \frac{1}{2}.$$

Therefore, the transmitter may be implemented based on the rear de-shaping PAS architecture, and the transmitter may input the to-be-shaped bit as a syndrome of the channel code into the shaper based on the target amplitude probability distribution to obtain the shaped amplitude bit, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, determining the target polarity bit based on the first polarity bit and the shaped amplitude bit includes:

performing forward error-correction encoding on the first polarity bit and the shaped amplitude bit to obtain a first check bit; and
performing serial-to-parallel conversion on the first check bit and the first polarity bit to obtain the target polarity bit.

In an embodiment, the transmitter performs serial-to-parallel conversion on the target transmission bit to obtain the to-be-shaped bit and a first polarity bit.

In an embodiment, the transmitter may determine the to-be-shaped bit based on the target transmission bit, and input the to-be-shaped bit as a syndrome of the channel code into the shaper of the transmitter based on the target amplitude probability distribution to obtain the shaped amplitude bit.

In an embodiment, after obtaining the first polarity bit and the shaped amplitude bit, the transmitter may perform forward error-correction encoding on the first polarity bit and the shaped amplitude bit to obtain the first check bit, perform serial-to-parallel conversion on the first check bit and the first polarity bit to obtain the target polarity bit, and uniquely determine the modulation constellation point based on the shaped amplitude bit and the target polarity bit.

Therefore, the transmitter may be implemented based on the rear de-shaping PAS architecture, and the transmitter may input the to-be-shaped bit as a syndrome of the channel code into the shaper based on the target amplitude probability distribution to obtain the shaped amplitude bit, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, before obtaining the shaped amplitude bit through the first decoder dedicated to the channel code based on the target amplitude probability distribution and the to-be-shaped bit, the method further includes:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

In an embodiment, the transmitter may perform forward error-correction encoding on the target transmission bit to obtain the first encoded codeword, and then perform serial-to-parallel conversion on the first encoded codeword to obtain the to-be-shaped bit and the target polarity bit.

In an embodiment, after obtaining the to-be-shaped bit, the transmitter may input the to-be-shaped bit as a syndrome of the channel code into the shaper of the transmitter based on the target amplitude probability distribution to obtain the shaped amplitude bit, and the modulation constellation point may be uniquely determined based on the shaped amplitude bit and the target polarity bit.

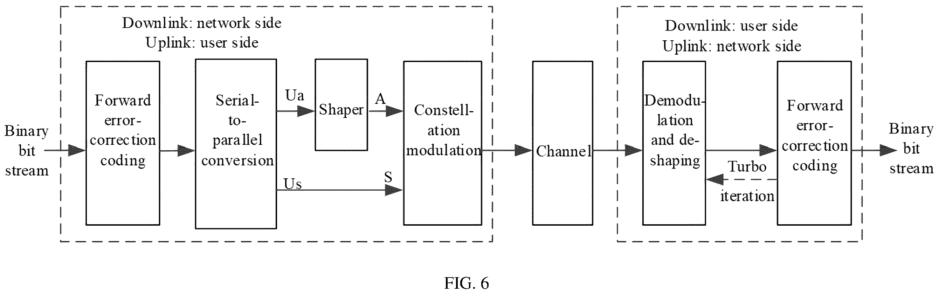

FIG. 6 is a schematic diagram of a front de-shaping PAS architecture according to an embodiment of the present application. FIG. 6 is an optional example of the present application, but does not serve as a limitation of the present application. As shown in FIG. 6, the transmitter may be implemented based on a front de-shaping PAS architecture. The transmitter may input the to-be-shaped bit as a syndrome of the channel code into the shaper based on the target amplitude probability distribution to obtain the shaped amplitude bit, and the modulation constellation point may be obtained based on the shaped amplitude bit and the target polarity bit.

In an embodiment, in the front de-shaping PAS architecture, the transmitter first performs forward error-correction coding, and then performs probability shaping to the codeword of the error-correction code.

In an embodiment, in the front de-shaping PAS architecture, the transmitter may first perform forward error-correction encoding on the target transmission bit, and then divide the error-correction encoded codeword into two parts: $U_a$ and $U_s = S$. The shaper may then shape $U_a$ to obtain the shaped amplitude bit A and combine it with the target polarity bit S to uniquely determine the ASK modulation constellation point.

In an embodiment, in the front de-shaping PAS architecture, the transmitter may convert the M-QAM complex constellation modulation into two channels of real $\sqrt{M}\text{-ASK}$ modulation, and calculate the target probability distribution $P_\Omega$ of the $\sqrt{M}\text{-ASK}$ modulation based on the signal-to-noise ratio (SNR), where $\Omega \in \{\pm 1, \ \pm 3, \ \pm 5, \ \ldots, \ \pm \frac{\sqrt{M}}{2}\}$. $P_\Omega$ may be the optimal probability distribution of the $\sqrt{M}\text{-ASK}$ modulation. The $\sqrt{M}\text{-ASK}$ may use BRGC binary labeling, and the probability distribution $P_\Omega$ may be further decoupled into the target amplitude probability distribution $P_A$ and the target polarity probability distribution $P_S$.

$$P_\Omega = P_A \cdot P_S = P_A \cdot \frac{1}{2}.$$

Therefore, the transmitter may be implemented based on the front de-shaping PAS architecture, and the transmitter may input the to-be-shaped bit as a syndrome of the channel code into the shaper based on the target amplitude probability distribution to obtain the shaped amplitude bit, the shaped amplitude bit may approach the target amplitude probability distribution, and probability shaping as well as small rate loss and low shaping complexity is provided. Under high signal-to-noise ratio and high spectral efficiency, shaping loss may be effectively reduced, and communication system performance may be improved.

In an embodiment, before obtaining the shaped amplitude bit through the first decoder dedicated to the channel code based on the target amplitude probability distribution and the to-be-shaped bit, the method further includes: determining the target amplitude probability distribution based on a target SNR and a target modulation order.

In an embodiment, the transmitter may determine the to-be-shaped bit based on the target transmission bit, and the target amplitude probability distribution may be determined based on the target SNR and the target modulation order.

In an embodiment, after determining the to-be-shaped bit and the target amplitude probability distribution, the transmitter may input the to-be-shaped bit as a syndrome of the channel code into the shaper of the transmitter based on the target amplitude probability distribution to obtain the shaped amplitude bit, and the modulation constellation point may be uniquely determined based on the shaped amplitude bit and the target polarity bit.

In an embodiment, the transmitter may convert the M-QAM complex constellation modulation into two channels of real $\sqrt{M}\text{-ASK}$ modulation, and the target modulation order may be $\sqrt{M}$. The process of determining the target amplitude probability distribution based on the target SNR and the target modulation order may include the following.

The ASK modulation constellation point follows the Maxwell-Boltzmann (MB) distribution and its binary label is BRGC. The constellation point is transmitted in an additive white Gaussian noise (AWGN) channel model, which is $Y = \Delta \cdot X + N$. Y may be a noisy version of the transmission constellation X, $\Delta$ is a power scaling coefficient of ASK, and N is the additive white Gaussian noise.

The $\sqrt{M}\text{-ASK}$ constellation point is de-shaped into one polarity bit S and ( m - 1 ) amplitude bits A, where $m = \log_2 \sqrt{M}$. The probability distribution of the amplitude A is $P_A(a) = \frac{e^{-\lambda a^2}}{\Sigma_a e^{-\lambda a^2}}$. The polarity distribution of the constellation point is $P_S(s) = P_S(+1) = P_S(-1) = \frac{1}{2}$. The probability of the ASK constellation point is $P_\Omega(x) = P_A(a)P_S(s) = P_A(a) \cdot \frac{1}{2}$.

Traversing is performed in a manner of $\Delta = \Delta_1, \Delta_2, \ldots$. Searching is performed on each value $\Delta_i$ in a binary mode. For $\lambda_i$ allowing the maximum entropy H(X) and transmission power not exceeding 1, the $\sqrt{M}\text{-ASK}$ channel capacity $C_i$ corresponding to SNR is calculated, the maximum capacity index $i_{max} = \arg\max C_i$ is determined, and $\Delta = \Delta_{i_{max}}$ and the optimal distribution (the target amplitude probability distribution) $P_A(a) = \frac{e^{-\lambda_{i_{max}} a^2}}{\Sigma_a e^{-\lambda_{i_{max}} a^2}}$ are obtained.

The target amplitude probability distribution may be determined based on the target SNR and the target modulation order. The transmitter may input the to-be-shaped bit as a syndrome of the channel code into the shaper based on the target amplitude probability distribution to obtain the shaped amplitude bit, the shaped amplitude bit may approach the target amplitude probability distribution, and probability shaping as well as small rate loss and low shaping complexity is provided.

In the method for mapping probability shaping provided by embodiments of the present application, decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

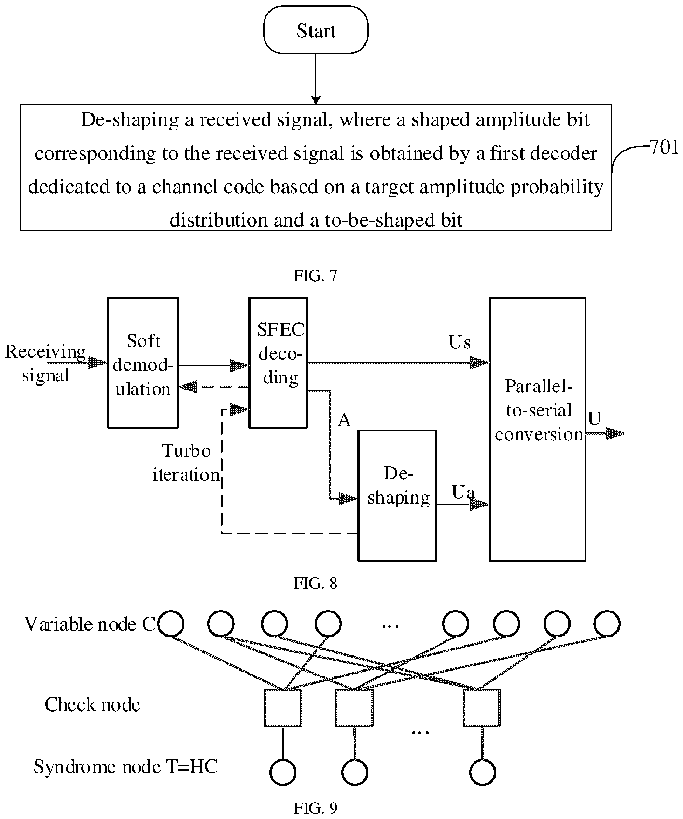

FIG. 7 is a first flowchart of a method for receiving and processing probability de-shaping according to an embodiment of the present application. As shown in FIG. 7, an embodiment of the present application provides a method for receiving and processing probability de-shaping, which may be performed by a receiver. The method includes the following steps.

Step 701: de-shaping a received signal.

A shaped amplitude bit corresponding to the received signal is obtained by a first decoder dedicated to a channel code based on a target amplitude probability distribution and a to-be-shaped bit.

In an embodiment, the receiver may de-shape the received signal based on the received signal, and obtain the target transmission bit corresponding to the received signal, where the shaped amplitude bit corresponding to the received signal may be obtained by the first decoder dedicated to a channel code based on the target amplitude probability distribution and the to-be-shaped bit.

In an embodiment, the transmitter may include a shaper, which may include a first decoder of the channel code. An input of the shaper may include a to-be-shaped bit used as a syndrome for the channel code. The target amplitude probability distribution may be the target probability distribution of the shaped amplitude, and the to-be-shaped bit may be determined based on the target transmission bit.

In an embodiment, in a downlink scenario, the receiver may be a terminal, such as a mobile phone.

In an embodiment, in an uplink scenario, the receiver may be a network side device, such as a base station.

For example, the receiver may be implemented based on a rear de-shaping PAS architecture, and the receiver may obtain the target transmission bit corresponding to the received signal based on the received signal.

For example, the receiver may be implemented based on a front de-shaping PAS architecture, and the receiver may obtain the target transmission bit corresponding to the received signal based on the received signal.

It should be noted that the above examples are only for illustrative purposes of embodiments of the present application and are not intended to limit the scope of embodiments of the present application.

In the method for receiving and processing probability de-shaping provided by embodiments of the present application, the shaped amplitude bit corresponding to the received signal may be constructed through a channel code, and by obtaining the target transmission bit corresponding to the received signal based on the received signal, de-shaping of the probability shaped code may be achieved. The PAS architecture may effectively reduce the shaping loss and improve the performance of communication systems under high SNR and high spectral efficiency.

In an embodiment, de-shaping the received signal includes:

inputting the received signal into a demodulator to obtain demodulation information; and

inputting the demodulation information into a forward error-correction decoder to obtain the shaped amplitude bit and a first polarity bit; and

inputting the shaped amplitude bit into a de-shaper to obtain the to-be-shaped bit.

In an embodiment, the receiver inputs the received signal into the demodulator to obtain the demodulation information, inputs the demodulation information into the forward error-correction decoder to obtain the shaped amplitude bit and the first polarity bit, inputs the shaped amplitude bit into the de-shaper to obtain the to-be-shaped bit, and determines the target transmission bit based on the to-be-shaped bit and the first polarity bit.

In an embodiment, the receiver may be implemented based on a rear de-shaping PAS architecture. The receiver may obtain the target transmission bit corresponding to the received signal based on the received signal. The shaped amplitude bit corresponding to the received signal is obtained by the shaper based on the target amplitude probability distribution. The input of the shaper includes a to-be-shaped bit, which is used as a syndrome for the channel code. The target amplitude probability distribution is the probability distribution of the shaped amplitude, and the to-be-shaped bit is determined based on the target transmission bit.

Therefore, the receiver may be based on the rear de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, inputting the shaped amplitude bit into the de-shaper to obtain the to-be-shaped bit includes:

in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.

In an embodiment, the receiver inputs the received signal into the demodulator to obtain demodulation information, and inputs the demodulation information into the forward error-correction decoder to obtain the shaped amplitude bit and the first polarity bit.

In an embodiment, after obtaining the shaped amplitude bit, in case that the shaped amplitude bit is a hard-value bit, the shaped amplitude bit may be input into the de-shaper based on the check constraint relationship to obtain the to-be-shaped bit. The to-be-shaped bit may be a hard-value bit corresponding to a syndrome of the channel code, and then the target transmission bit may be determined based on the to-be-shaped bit and the first polarity bit.

For example, in the rear de-shaping PAS architecture, the de-shaper of the receiver may calculate the hard-value bit input based on the check constraint relationship to obtain the hard-value bit output, and may not participate in Turbo iteration.

It should be noted that the above examples are only for illustrative purposes of embodiments of the present application and are not intended to limit the scope of embodiments of the present application.

Therefore, the receiver may be implemented based on the rear de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, inputting the shaped amplitude bit into the de-shaper to obtain the to-be-shaped bit includes: in case that the shaped amplitude bit is a soft-value bit, inputting the shaped amplitude bit into the de-shaper to obtain the to-be-shaped bit, where the de-shaper includes a second decoder of the channel code, and the to-be-shaped bit is a soft-value bit corresponding to a syndrome of the channel code.

In an embodiment, the receiver inputs the received signal into the demodulator to obtain demodulation information, and inputs the demodulation information into the forward error-correction decoder to obtain the shaped amplitude bit and the first polarity bit.

In an embodiment, after obtaining the shaped amplitude bit, in case that the shaped amplitude bit is a soft-value bit, the shaped amplitude bit may be input into the de-shaper to obtain the to-be-shaped bit. The de-shaper may include a second decoder of the channel code, and the to-be-shaped bit may be a soft-value bit corresponding to the syndrome of the channel code. The target transmission bit may be determined based on the to-be-shaped bit and the first polarity bit.

For example, in the rear de-shaping PAS architecture, the de-shaper of the receiver may calculate the soft-value bit input based on the decoder of the channel code to obtain the soft-value bit output, and participate in Turbo iteration.

It should be noted that the above examples are only for illustrative purposes of embodiments of the present application and are not intended to limit the scope of embodiments of the present application.

Therefore, the receiver may be implemented based on the rear de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, de-shaping the received signal includes:

demodulating and de-shaping the received signal to obtain a second encoded codeword; and

inputting the second encoded codeword into a forward error-correction decoder to obtain the target transmission bit.

In an embodiment, the receiver may demodulate and shape the received signal to obtain the second encoded codeword, and the second encoded codeword may then be input into the forward error-correction decoder to obtain the target transmission bit.

In an embodiment, the receiver may be implemented based on the front de-shaping PAS architecture. The receiver may obtain the target transmission bit corresponding to the received signal based on the received signal. The shaped amplitude bit corresponding to the received signal is obtained by the shaper based on the target amplitude probability distribution. The input of the shaper includes a to-be-shaped bit, which is used as a syndrome for the channel code. The target amplitude probability distribution is the probability distribution of the shaped amplitude, and the to-be-shaped bit is determined based on the target transmission bit.

In an embodiment, in the front de-shaping PAS architecture, the receiver first de-shape, and then performs forward error-correction decoding.

In an embodiment, in the front de-shaping PAS architecture, the receiver may first demodulate and then de-shape, or jointly demodulate and de-shape, and then output the soft bit to the forward error-correction decoder to recover the target transmission bit.

In an embodiment, the process of joint demodulation and de-shaping may include: a posterior probability is calculated based on the received signal and the shaping check constraint relationship, and the soft bit is output to the forward error-correction decoder.

In an embodiment, the process of demodulating first and de-shaping later may include: the demodulator outputs the demodulation information (which may be a probability value) based on the received signal, and the de-shaper may then perform probability correction based on the demodulation information and the shaping check constraint relationship, and outputs the soft bit to the forward error-correction decoder.

In an embodiment, the shaped code based on CCDM and the shaped code based on ESS cannot support soft input soft output detection and are not suitable for front de-shaping PAS architecture and better performing Turbo receiver. However, the shaped code constructed based on the channel code may support soft input soft output detection and is suitable for front de-shaping PAS architecture and better performing Turbo receiver.

Therefore, the receiver may be implemented based on the front de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a second decoder of the channel code, and the second encoded codeword is a soft-value bit corresponding to a syndrome of the channel code.

In an embodiment, the receiver may input the received signal into the demodulator to obtain the demodulation information.

In an embodiment, after obtaining the demodulation information, in case that the demodulation information is a soft-value bit, the demodulation information may be input into the de-shaper to obtain a second encoded codeword. The de-shaper may include a second decoder of the channel code. The second encoded codeword may be the soft-value bit corresponding to the syndrome of the channel code, and may then be input into the forward error-correction decoder to obtain the target transmission bit.

For example, in the front de-shaping PAS architecture, the de-shaper of the receiver may calculate the soft-value bit input based on the decoder of the channel code to obtain the soft-value bit output, and participate in Turbo iteration.

It should be noted that the above examples are only for illustrative purposes of embodiments of the present application and are not intended to limit the scope of embodiments of the present application.

Therefore, the receiver may be implemented based on the front de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a third decoder of the channel code, and the second encoded codeword is a hard-value bit corresponding to a syndrome of the channel code.

In an embodiment, the receiver may input the received signal into the demodulator to obtain the demodulation information.

In an embodiment, after obtaining the demodulation information, in case that the demodulation information is a soft-value bit, the demodulation information may be input to the de-shaper to obtain a second encoded codeword. The de-shaper may include a third decoder of the channel code. The second encoded codeword may be a hard-value bit corresponding to the syndrome of the channel code, and may then be input to the forward error-correction decoder to obtain the target transmission bit.

For example, in the front de-shaping PAS architecture, the de-shaper of the receiver may calculate the soft-value bit input based on the decoder of the channel code to obtain the hard-value bit output, and may not participate in Turbo iteration.

It should be noted that the above examples are only for illustrative purposes of embodiments of the present application and are not intended to limit the scope of embodiments of the present application.

Therefore, the receiver may be implemented based on the front de-shaping PAS architecture, and the shaped amplitude bit corresponding to the received signal may be constructed through the channel code. The receiver may obtain the target transmission bit corresponding to the received signal based on the received signal, which may de-shape the probability shaped code. The PAS architecture may effectively reduce the forming loss and improve the performance of the communication system under high SNR and high spectral efficiency.

In an embodiment, de-shaping the received signal includes:

obtaining a target transmission bit corresponding to the received signal based on a Turbo iteration process among the demodulator, the de-shaper and the forward error-correction decoder.

In an embodiment, for the decoder that supports soft input and soft output, a Turbo iterative receiver (interaction iterations among decoders, demodulators, and de-shapers) may be used, or a non Turbo iterative serial receiver may be used. The de-shaper that only supports hard output may use a non Turbo iterative serial receiver.

For example, the receiver may be implemented based on the rear de-shaping PAS architecture, and the receiver may obtain the target transmission bit corresponding to the received signal based on the Turbo iteration process among the demodulator, the de-shaper, and the forward error-correction decoder.

For example, the receiver may be implemented based on the front de-shaping PAS architecture, and the receiver may obtain the target transmission bit corresponding to the received signal based on the Turbo iteration process among the demodulator, the de-shaper, and the forward error-correction decoder.

It should be noted that the above examples are only for illustrative purposes of embodiments of the present application and are not intended to limit the scope of embodiments of the present application.

FIG. 8 is a second flowchart of a method for receiving and processing probability de-shaping according to an embodiment of the present application. FIG. 8 is an optional example of the present application, but is not intended as a limitation of the present application.

As shown in FIG. 8, the shaped code constructed through the channel code may support soft input soft output de-shaping (e.g., based on an LDPC code), and the use of rear de-shaping PAS architecture may also support the Turbo receiver. The receiver may demodulate and calculate the soft bit value based on the optimal probability distribution $P_\Omega$ of $\sqrt{M}\text{-ASK}$ modulation and the received signal, and then send it to a SFEC decoder for decoding to obtain the first polarity bit Us and the shaped amplitude bit A. The soft value of A is sent to the de-shaper to obtain the to-be-shaped bit Ua. The de-shaper inputs the soft value of A to the SFEC decoder for participating in Turbo iteration, which may obtain an additional performance gain.

Therefore, to achieve better performance, the receiver may use a more complex Turbo iterative receiver for interaction iterations among demodulation, de-shaping, and forward error-correction decoding.

In the method for receiving and processing probability de-shaping provided by embodiments of the present application, the shaped amplitude bit corresponding to the received signal may be constructed through a channel code, and by obtaining the target transmission bit corresponding to the received signal based on the received signal, de-shaping of the probability shaped code may be achieved. The PAS architecture may effectively reduce the shaping loss and improve the performance of communication systems under high SNR and high spectral efficiency.

In an embodiment, in the rear de-shaping PAS architecture (such as the architecture shown in FIG. 1), the channel code of the shaper of the transmitter may use a binary polar code. A polarization kernel of the polar code is $\begin{bmatrix} 1 & 0 \\ 1 & 1 \end{bmatrix}$, a code length is n = 128, and 1024-QAM modulation is converted into two independent 32-ASK modulation.

When operating at SNR = 25 dB, the target amplitude probability distribution $P_A(a) = \dfrac{e^{-\lambda a^2}}{\sum_a e^{-\lambda a^2}}$ is calculated, where $\lambda$ = 0.0033 and the power scaling coefficient $\Delta$ = 0.0842. Examples of the binary labeling and the probability distribution may be as Table 1.

The bit layer may also be referred to as an amplitude bit layer. For each amplitude bit layer, each frozen index set F and each information index set $F^c$ of the polar code, a polar code with a code rate of $R_i$ and a code length of n = 128 may be determined based on the sequence or density evolution in the 5G table. A conditional entropy of the probability amplitude bit of each PAS layer is calculated based on the probability distribution in Table 1 to obtain $R_i = 1 - H(A_i|A_1 A_2 \ldots A_{i-1}) + \varepsilon$, where $\varepsilon$ = 0.08. For each layer, $k_i = 128 \cdot (1 - R_i)$ information bits are loaded onto the syndrome of the polar code (i.e., the frozen index set), and a codeword is obtained through serial cancellation (SC) decoding as an i-th layer amplitude bit.

SFEC may be an LDPC code, and the receiver may calculate the posterior probability based on the received signal y and the prior probability in Table 1 to obtain the soft bit input for SFEC decoding, and then decode and obtain Us and

$$G = B_N \begin{bmatrix} 1 & 0 \\ 1 & 1 \end{bmatrix}^{\otimes \log_2 n}$$

A. The information bit loaded onto the syndrome are calculated by Ua = T = G(F, :) · A, where is a generation matrix of the polar code, Ua may be the to-be-shaped bit, and T may be the syndrome.

Table 1 Binary labels and probability distribution of 32-ASK modulation

| $\Omega$ | -31 | -29 | -27 | -25 | -23 | -21 | -19 | -17 | -15 | -13 | -11 |
|---|---|---|---|---|---|---|---|---|---|---|---|
| $A_1A_2A_3A_4A_5$ | 1111 1 | 1111 0 | 1110 0 | 1110 1 | 1100 1 | 1100 0 | 1101 0 | 1101 1 | 1001 1 | 1001 0 | 1000 0 |
| $P_\Omega$ | 0.00 28 | 0.00 41 | 0.00 6 | 0.00 84 | 0.01 15 | 0.01 53 | 0.01 99 | 0.02 53 | 0.03 12 | 0.03 75 | 0.04 39 |
| $\Omega$ | -9 | -7 | -5 | -3 | -1 | +1 | +3 | +5 | +7 | +9 | +11 |
| $A_1A_2A_3A_4A_5$ | 1000 1 | 1010 1 | 1010 0 | 1011 0 | 1011 1 | 0011 1 | 0011 0 | 0010 0 | 0010 1 | 0000 1 | 0000 0 |
| $P_\Omega$ | 0.05 | 0.05 56 | 0.06 01 | 0.06 34 | 0.06 51 | 0.06 51 | 0.06 34 | 0.06 01 | 0.05 56 | 0.05 | 0.04 39 |
| $\Omega$ | +13 | +15 | +17 | +19 | +21 | +23 | +25 | +27 | +29 | +31 | |
| $A_1A_2A_3A_4A_5$ | 0001 0 | 0001 1 | 0101 1 | 0101 0 | 0100 0 | 0100 1 | 0110 1 | 0110 0 | 0111 0 | 0111 1 | |
| $P_\Omega$ | 0.03 75 | 0.03 12 | 0.02 53 | 0.01 99 | 0.01 53 | 0.01 15 | 0.00 84 | 0.00 6 | 0.00 41 | 0.00 28 | |

In an embodiment, in the rear de-shaping PAS architecture (an architecture as shown in FIG. 1), the channel code of the shaper of the transmitter may use a 32-bit polar code, with a polarization kernel of $\begin{bmatrix} 1 & 0 \\ \alpha & 1 \end{bmatrix}$, where $\alpha = 2$ is a primitive element in GF (32) domain. A code length n = 128. 1024-QAM modulation is converted into two channels of independent 32-ASK modulation operating at SNR = 25 dB. The code rate of the 32-bit polar code R = 1 - H(A$_1$A$_2$ ... A$_5$) + $\varepsilon$, where $\varepsilon$ = 0.08, is calculated based on the probability distribution in Table 1. The frozen symbol F and the information symbol F$^c$ of the polar code are determined through density evolution or Monte Carlo simulation. To-be-transmitted information bits (that is, the target transmission bit) are mapped as a set of nonbinary symbols on GF (32) every 5 bits, and are loaded onto the frozen symbol F. The nonbinary codeword is obtained through nonbinary SC decoding, and is then mapped into a binary bit stream.

SFEC adopts the LDPC code, and the de-shaper of the receiver is based on polar belief propagation decoder for iterative decoding implementation, and participates in LDPC iterative decoding in the Turbo receiver.

In an embodiment, in the front de-shaping PAS architecture (an architecture as shown in FIG. 6), the channel code of the shaper of the transmitter may adopt a binary LDPC code with a code length n = 128. 256-QAM modulation is converted into two independent channels of 16-ASK modulation operating at SNR = 17 dB. It is calculated that $\lambda$ = 0.0132, and the ASK power scaling coefficient $\Delta$ = 0.1685. The 16-ASK probability distribution and binary labels are shown in Table 2. The conditional entropy of the probability amplitude bit for each layer of PAS is calculated based on the probability distribution in Table 2, to determine the code rate of LDPC code for each layer R$_i$ = 1 - H(A$_i$|A$_1$A$_2$ ... A$_{i-1}$) + $\varepsilon$, where $\varepsilon$ = 0.08. For each amplitude bit layer, k$_i$ = 128 - (1 - R$_i$) transmission bits are loaded onto the syndrome of the LDPC code in that layer.

FIG. 9 is a schematic diagram of a belief propagation decoder based on a Tanner graph according to an embodiment of the present application. As shown in FIG. 9, the LDPC Tanner graph may include a variable node C, a check node and a syndrome node. A syndrome satisfies T = HC$^T$, where T represents the syndrome, and H represents a check matrix. Through BP decoding, a codeword that satisfies the distribution may be obtained as a probability shaped amplitude bit.

LDPC code is adopted in channel encoding, and the receiver may adopt a Turbo receiver for interaction iterations among demodulation, de-shaping and forward error-correction decoding.

Table 2 Binary labels and probability distribution of 16-ASK modulation

| $\Omega$ | -15 | -13 | -11 | -9 | -7 | -5 | -3 | -1 |
|---|---|---|---|---|---|---|---|---|
| A$_1$A$_2$A$_3$A$_4$ | 1111 | 1110 | 1100 | 1101 | 1001 | 1000 | 1010 | 1011 |
| P$_\Omega$ | 0.0046 | 0.01 | 0.022 | 0.04 | 0.066 | 0.096 | 0.122 | 0.1377 |
| $\Omega$ | +1 | +3 | +5 | +7 | +9 | +11 | +13 | +15 |
| A$_1$A$_9$ A$_3$A$_4$ | 0011 | 0010 | 0000 | 0001 | 0101 | 0100 | 0110 | 0111 |
| P$_\Omega$ | 0.1377 | 0.122 | 0.0956 | 0.0664 | 0.041 | 0.022 | 0.01 | 0.0046 |

In an embodiment, in the front de-shaping PAS architecture (an architecture as shown in FIG. 6), the channel code of the shaper of the transmitter may adopt a hexadecimal LDPC code. The 256-QAM modulation is converted into two independent channels of 16-ASK modulation. When operating at SNR = 17 dB, $\lambda$ = 0.0132 and the ASK power scaling coefficient $\Delta$ = 0.1685 are calculated. The 16-ASK probability distribution and binary labels are shown in Table 2. The code rate of the hexadecimal LDPC code R = 1 - H(A$_1$A$_2$A$_3$A$_4$) + $\varepsilon$, where $\varepsilon$ = 0.08, is calculated based on the probability distribution in Table 2. To-be-transmitted information bits (that is, the target transmission bit) are mapped as a set of nonbinary symbols on GF (16) every 4 bits, and are loaded onto the syndrome symbol of LDPC code. The codeword symbol is obtained through the BP decoding algorithm of the nonbinary LDPC code, and is then converted into a binary bit stream to obtain the shaped amplitude bit.

LDPC code may be used for channel coding, and the receiver may use a Turbo receiver for interaction iterations among demodulation, de-shaping and forward error-correction decoding.

In the method for mapping probability shaping provided by embodiments of the present application, decoding may be performed based on the target amplitude probability distribution through the first decoder dedicated to the channel code, the shaped amplitude bit may be obtained, the shaped amplitude bit may approach the target amplitude probability distribution, and probability shaping as well as small rate loss and low shaping complexity may be provided. Under high signal-to-noise ratio and high spectral efficiency, shaping loss may be effectively reduced, and communication system performance may be improved.

In an embodiment, in a downlink scenario, the transmitter may be a network side device, and the receiver may be a terminal device.

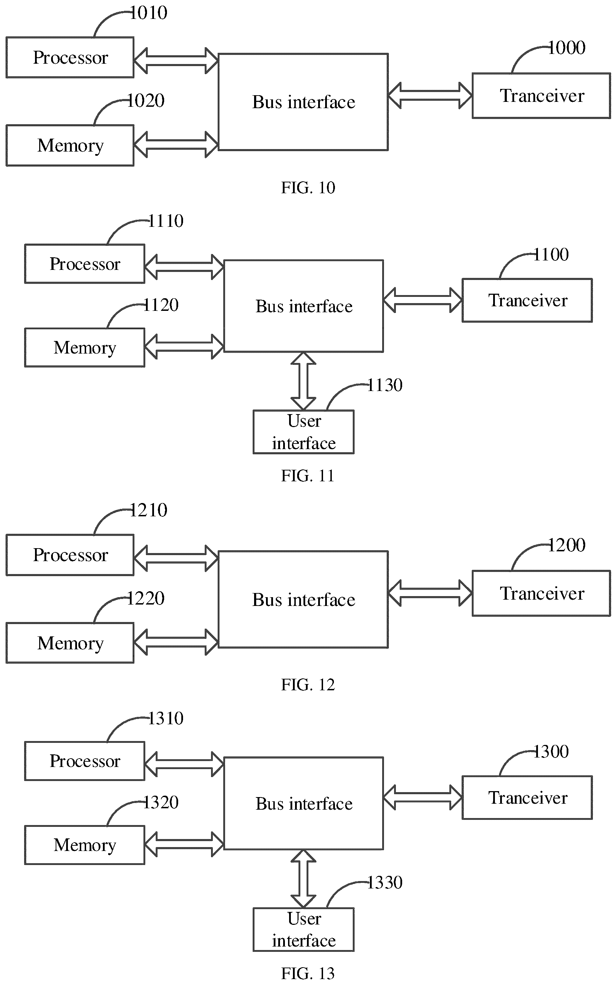

FIG. 10 is a first schematic structural diagram of a network side device according to an embodiment of the present application. As shown in FIG. 10, the network side device includes a memory 1020, a transceiver 1000 and a processor 1010.

The memory 1020 is used for storing a computer program; the transceiver 1000 is used for transmitting and receiving data under control of the processor 1010; and the processor 1010 is used for reading the computer program in the memory 1020 and performing the following operations:

obtaining a shaped amplitude bit through a first decoder dedicated to a channel code based on a target amplitude probability distribution and a to-be-shaped bit; and

mapping the shaped amplitude bit to a modulation constellation point.

In an embodiment, the transceiver 1000 is used for receiving and transmitting data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also use a multi-core architecture.

In an embodiment, in case that the channel code is a binary channel code, obtaining the shaped amplitude bit through the first decoder dedicated to the channel code based on the target amplitude probability distribution and the to-be-shaped bit includes:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to the multiple bit layers.

In an embodiment, obtaining, based on the target amplitude probability distribution and the to-be-shaped bit, the decoded codeword corresponding to each of the multiple bit layers through the first decoder corresponding to each of the multiple bit layers includes:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

In an embodiment, obtaining the decoded codeword corresponding to each of the multiple bit layers based on the first decoder corresponding to each of the multiple bit layers and the syndrome corresponding to each of the multiple bit layers includes:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, determining the code rate corresponding to each of the multiple bit layers based on the target amplitude probability distribution includes:

determining entropy corresponding to an amplitude bit of each layer in the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, obtaining the shaped amplitude bit through the first decoder dedicated to the channel code based on the target amplitude probability distribution and the to-be-shaped bit includes:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, determining the code rate of the nonbinary channel code based on the target amplitude probability distribution includes:

determining entropy corresponding to all amplitude bits based on the target amplitude probability distribution; and

determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, mapping the shaped amplitude bit to the modulation constellation point includes: mapping the shaped amplitude bit and a target polarity bit to the modulation constellation point.
In an embodiment, before mapping the shaped amplitude bit to modulation constellation points, the operations further include:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, determining the target polarity bit based on the first polarity bit and the shaped amplitude bit includes:

performing forward error-correction encoding on the first polarity bit and the shaped amplitude bit to obtain a first check bit; and
performing serial-to-parallel conversion on the first check bit and the first polarity bit to obtain the target polarity bit.

In an embodiment, before obtaining the shaped amplitude bit through the first decoder dedicated to the channel code based on the target amplitude probability distribution and the to-be-shaped bit, the operations further include:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

In an embodiment, before obtaining the shaped amplitude bit through the first decoder dedicated to the channel code based on the target amplitude probability distribution and the to-be-shaped bit, the operations further include: determining the target amplitude probability distribution based on a target signal-to-noise ratio (SNR) and a target modulation order.

It should be noted that the network side device provided by embodiments of the present application may achieve all the method steps implemented in the method embodiment where the executing subject is the network side device in the downlink scenario, and may achieve the same technical effect. Therefore, the same parts and beneficial effects as in the method embodiment in this embodiment will not be elaborated in detail.

FIG. 11 is a first schematic structural diagram of a terminal according to an embodiment of the present application. As shown in FIG. 11, the terminal includes a memory 1120, a transceiver 1100 and a processor 1110.

The memory 1120 is used for storing a computer program; the transceiver 1100 is used for transmitting and receiving data under control of the processor 1110; and the processor 1110 is used for reading the computer program in the memory 1120 and performing the following operations:

de-shaping a received signal,
where a shaped amplitude bit corresponding to the received signal is obtained by a first decoder dedicated to a channel code based on a target amplitude probability distribution and a to-be-shaped bit.

In an embodiment, the transceiver 1100 is used for receiving and transmitting data under control of the processor 1110.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. For different user equipment, a user interface 1130 may be an interface capable of externally or internally connecting the required equipment, and the connected equipment includes, but not limited to, a keypad, a display, a speaker, a microphone, a joystick, and the like.

The processor 1110 is responsible for managing the bus architecture and general processing, and the memory 1120 may store data used by the processor 1110 when performing operations.

In an embodiment, the processor 1110 may be a central processing unit (CPU), an application specific integrated circuit (ASIC), a field-programmable gate array (FPGA), or a complex programmable logic device (CPLD), the processor may also use a multi-core architecture.

The processor is used for performing any one of the methods provided by the present application based on an obtained executable instruction by calling a computer program stored in the memory. The processor and memory may also be physically arranged separately.

In an embodiment, de-shaping the received signal includes:

inputting the received signal into a demodulator to obtain demodulation information; and

inputting the demodulation information into a forward error-correction decoder to obtain the shaped amplitude bit and a first polarity bit; and

inputting the shaped amplitude bit into the de-shaper to obtain the to-be-shaped bit; and determining the target transmission bit based on the to-be-shaped bit and the first polarity bit.

In an embodiment, inputting the shaped amplitude bit into the de-shaper to obtain the to-be-shaped bit includes: in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.

In an embodiment, inputting the shaped amplitude bit into the de-shaper to obtain the to-be-shaped bit includes: in case that the shaped amplitude bit is a soft-value bit, inputting the shaped amplitude bit into the de-shaper to obtain the to-be-shaped bit, where the de-shaper includes a second decoder of the channel code, and the to-be-shaped bit is a soft-value bit corresponding to a syndrome of the channel code.

In an embodiment, de-shaping the received signal includes:

demodulating and de-shaping the received signal to obtain a second encoded codeword; and

inputting the second encoded codeword into a forward error-correction decoder to obtain the target transmission bit.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a second decoder of the channel code, and the second encoded codeword is a soft-value bit corresponding to a syndrome of the channel code.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a third decoder of the channel code, and the second encoded codeword is a hard-value bit corresponding to a syndrome of the channel code.

In an embodiment, de-shaping the received signal includes: obtaining a target transmission bit corresponding to the received signal based on a Turbo iteration process among the demodulator, the de-shaper and the forward error-correction decoder.

It should be noted that the terminal provided by the embodiments of the present application may achieve all the method steps implemented in the method embodiments with the execution subject as the terminal in the downlink scenario, and may achieve the same technical effect. The same parts and beneficial effects as in the method embodiments in this embodiment will not be elaborated in detail.

In an embodiment, in the uplink scenario, the receiver may be a network side device, and the transmitter may be a terminal device.

FIG. 12 is a second schematic structural diagram of a network side device according to an embodiment of the present application. As shown in FIG. 12, the network side device includes a memory 1220, a transceiver 1200, and a processor 1210.

The memory 1220 is used for storing a computer program; the transceiver 1200 is used for transmitting and receiving data under control of the processor 1210; and the processor 1210 is used for reading the computer program in the memory 1220 and performing the following operations:

de-shaping a received signal,

where a shaped amplitude bit corresponding to the received signal is obtained by a first decoder dedicated to a channel code based on a target amplitude probability distribution and a to-be-shaped bit.

In an embodiment, the transceiver 1200 is used for receiving and transmitting data under control of the processor 1210.

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field-programmable gate array (FPGA), or a complex programmable logic device (CPLD), the processor may also use a multi-core architecture.

In an embodiment, de-shaping the received signal includes:

inputting the received signal into a demodulator to obtain demodulation information; and

inputting the demodulation information into a forward error-correction decoder to obtain the shaped amplitude bit and a first polarity bit; and

inputting the shaped amplitude bit into the de-shaper to obtain the to-be-shaped bit; and

determining the target transmission bit based on the to-be-shaped bit and the first polarity bit.

In an embodiment, inputting the shaped amplitude bit into the de-shaper to obtain the to-be-shaped bit includes: in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.

In an embodiment, inputting the shaped amplitude bit into the de-shaper to obtain the to-be-shaped bit includes: in case that the shaped amplitude bit is a soft-value bit, inputting the shaped amplitude bit into the de-shaper to obtain the to-be-shaped bit, where the de-shaper includes a second decoder of the channel code, and the to-be-shaped bit is a soft-value bit corresponding to a syndrome of the channel code.

In an embodiment, de-shaping the received signal includes:

demodulating and de-shaping the received signal to obtain a second encoded codeword; and

inputting the second encoded codeword into a forward error-correction decoder to obtain the target transmission bit.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a second decoder of the channel code, and the second encoded codeword is a soft-value bit corresponding to a syndrome of the channel code.

In an embodiment, demodulating and de-shaping the received signal to obtain the second encoded codeword includes:

inputting the received signal into a demodulator to obtain demodulation information; and

in case that the demodulation information is a soft-value bit, inputting the demodulation information into a de-shaper to obtain the second encoded codeword, where the de-shaper includes a third decoder of the channel code, and the second encoded codeword is a hard-value bit corresponding to a syndrome of the channel code.

In an embodiment, de-shaping the received signal includes:

obtaining a target transmission bit corresponding to the received signal based on a Turbo iteration process among the demodulator, the de-shaper and the forward error-correction decoder.

It should be noted that the network side device provided by embodiments of the present application may achieve all the method steps implemented in the method embodiment where the executing subject is the network side device in the uplink scenario, and may achieve the same technical effect. The same parts and beneficial effects in this embodiment as in the method embodiment will not be elaborated in detail.

FIG. 13 is a second schematic structural diagram of a terminal according to an embodiment of the present application. As shown in FIG. 13, the terminal includes a memory 1320, a transceiver 1300 and a processor 1310.

The memory 1320 is used for storing a computer program; the transceiver 1300 is used for transmitting and receiving data under control of the processor 1310; and the processor 1310 is used for reading the computer program in the memory 1320 and performing the following operations:

obtaining a shaped amplitude bit through a first decoder dedicated to a channel code based on a target amplitude probability distribution and a to-be-shaped bit; and

mapping the shaped amplitude bit to a modulation constellation point.

In an embodiment, the transceiver 1300 is used for receiving and transmitting data under control of the processor 1310.

In FIG. 13, a bus architecture may include any number of interconnected buses and bridges, which are linked together through various circuits of one or more processors represented by the processor 1310 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1300 may include multiple elements, i.e., including a transmitter and a receiver, units for providing communication with various other devices over transmission media including wireless channels, wired channels, fiber optic cables, and the like. For different user equipment, a user interface 1330 may be an interface capable of externally or internally connecting the required equipment, and the connected equipment includes, but not limited to, a keypad, a display, a speaker, a microphone, a joystick, and the like.

The processor 1310 is responsible for managing the bus architecture and general processing, and the memory 1320 may store data used by the processor 1310 when performing operations.

In an embodiment, the processor 1310 may be a central processing unit (CPU), an application specific integrated circuit (ASIC), a field-programmable gate array (FPGA), or a complex programmable logic device (CPLD), the processor may also use a multi-core architecture.

The processor is used for performing any one of the methods provided by the present application based on an obtained executable instruction by calling a computer program stored in the memory. The processor and memory may also be physically arranged separately.

In an embodiment, in case that the channel code is a binary channel code, obtaining the shaped amplitude bit through the first decoder dedicated to the channel code based on the target amplitude probability distribution and the to-be-shaped bit includes:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to the multiple bit layers.

In an embodiment, obtaining, based on the target amplitude probability distribution and the to-be-shaped bit, the decoded codeword corresponding to each of the multiple bit layers through the first decoder corresponding to each of the multiple bit layers includes:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

In an embodiment, obtaining the decoded codeword corresponding to each of the multiple bit layers based on the first decoder corresponding to each of the multiple bit layers and the syndrome corresponding to each of the multiple bit layers includes:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, determining the code rate corresponding to each of the multiple bit layers based on the target amplitude probability distribution includes:

determining entropy corresponding to an amplitude bit of each layer in the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, obtaining the shaped amplitude bit through the first decoder dedicated to the channel code based on the target amplitude probability distribution and the to-be-shaped bit includes:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, determining the code rate of the nonbinary channel code based on the target amplitude probability distribution includes:

determining entropy corresponding to all amplitude bits based on the target amplitude probability distribution; and

determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, mapping the shaped amplitude bit to the modulation constellation point includes:
mapping the shaped amplitude bit and a target polarity bit to the modulation constellation point.

In an embodiment, before mapping the shaped amplitude bit to modulation constellation points, the operations further include:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, determining the target polarity bit based on the first polarity bit and the shaped amplitude bit includes:

performing forward error-correction encoding on the first polarity bit and the shaped amplitude bit to obtain a first check bit; and

performing serial-to-parallel conversion on the first check bit and the first polarity bit to obtain the target polarity bit.

In an embodiment, before obtaining the shaped amplitude bit through the first decoder dedicated to the channel code based on the target amplitude probability distribution and the to-be-shaped bit, the operations further include:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

In an embodiment, before obtaining the shaped amplitude bit through the first decoder dedicated to the channel code based on the target amplitude probability distribution and the to-be-shaped bit, the operations further include: determining the target amplitude probability distribution based on a target signal-to-noise ratio (SNR) and a target modulation order.

It should be noted that the above terminal provided by the embodiments of the present application may achieve all the method steps implemented in the method embodiments with the execution subject as the terminal in the uplink scenario, and may achieve the same technical effect. The same parts and beneficial effects as in the method embodiments in this embodiment will not be elaborated in detail.

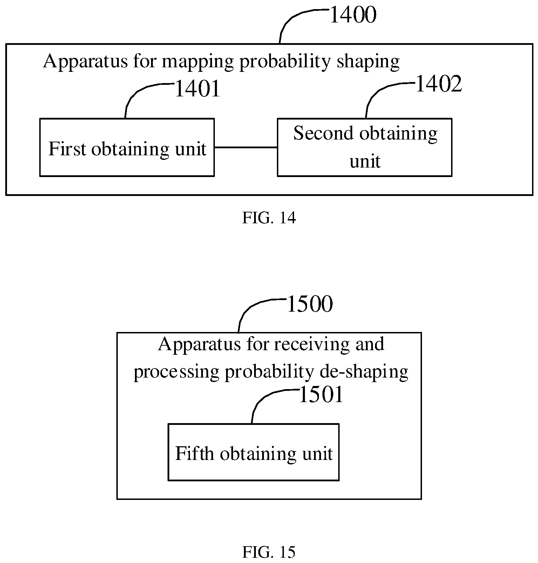

FIG. 14 is a schematic structural diagram of an apparatus for mapping probability shaping according to an embodiment of the present application. As shown in FIG. 14, the apparatus 1400 is applied to a transmitter, including: a first obtaining unit 1401 and a second obtaining unit 1402.

The first obtaining unit 1401 is used for obtaining a shaped amplitude bit through a first decoder dedicated to a channel code based on a target amplitude probability distribution and a to-be-shaped bit.

The second obtaining unit 1402 is used for mapping the shaped amplitude bit to a modulation constellation point.

In an embodiment, in case that the channel code is a binary channel code, the first obtaining unit is further used for:

determining multiple bit layers, where each of the multiple bit layers corresponds to one first decoder;

obtaining, based on the target amplitude probability distribution and the to-be-shaped bit, a decoded codeword corresponding to each of the multiple bit layers through the first decoder corresponding to each of the multiple bit layers; and

obtaining the shaped amplitude bit based on the decoded codeword corresponding to the multiple bit layers.

In an embodiment, the first obtaining unit is further used for:

determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers; and

obtaining the shaped amplitude bit based on the decoded codeword corresponding to the multiple bit layers.

In an embodiment, the first obtaining unit is further used for:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

where the first decoded codeword includes a decoded codeword corresponding to each of all bit layers before the target bit layer, and the target bit layer is a bit layer other than the first bit layer.

In an embodiment, the first obtaining unit is further used for:

determining entropy corresponding to an amplitude bit of each layer in the multiple bit layers based on the target amplitude probability distribution; and

determining the code rate corresponding to each of the multiple bit layers based on entropy corresponding to each of the multiple bit layers.

In an embodiment, in case that the channel code is a nonbinary channel code, the first obtaining unit is further used for:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, where the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

In an embodiment, the first obtaining unit is further used for:

determining entropy corresponding to all amplitude bits based on the target amplitude probability distribution; and

determining the code rate of the nonbinary channel code based on the entropy corresponding to all amplitude bits.

In an embodiment, the first decoder includes any one of the following:

a decoder supporting soft input and soft output;

a decoder supporting soft input and hard output; or

a decoder obtained through neural network training.

In an embodiment, the second obtaining unit is further used for:

mapping the shaped amplitude bit and a target polarity bit to the modulation constellation point.

In an embodiment, the apparatus further includes a third obtaining unit, where before mapping the shaped amplitude bit to the modulation constellation point, the third obtaining unit is used for:

obtaining a target transmission bit;

performing serial-to-parallel conversion on the target transmission bit to obtain the to-be-shaped bit and a first polarity bit; and

determining the target polarity bit based on the first polarity bit and the shaped amplitude bit.

In an embodiment, the third obtaining unit is further used for:

performing forward error-correction encoding on the first polarity bit and the shaped amplitude bit to obtain a first check bit; and

performing serial-to-parallel conversion on the first check bit and the first polarity bit to obtain the target polarity bit.

In an embodiment, the apparatus further includes a fourth obtaining unit, and before obtaining the shaped amplitude bit through the first decoder dedicated to the channel code based on the target amplitude probability distribution and the to-be-shaped bit, the fourth obtaining unit is used for:

obtaining a target transmission bit;

performing forward error-correction encoding on the target transmission bit to obtain a first encoded codeword; and

performing serial-to-parallel conversion on the first encoded codeword to obtain the to-be-shaped bit and the target polarity bit.

In an embodiment, the apparatus further includes a determining unit, and before obtaining the shaped amplitude bit through the first decoder dedicated to the channel code based on the target amplitude probability distribution and the to-be-shaped bit, the determining unit is used for:
determining the target amplitude probability distribution based on a target signal-to-noise ratio (SNR) and a target modulation order.

FIG. 15 is a schematic structural diagram of an apparatus for receiving and processing probability de-shaping according to an embodiment of the present application. As shown in FIG. 15, the apparatus 1500 is applied to a receiver, including: a fifth obtaining unit 1501.

The fifth obtaining unit 1501 is used for de-shaping a received signal.

A shaped amplitude bit corresponding to the received signal is obtained by a first decoder dedicated to a channel code based on a target amplitude probability distribution and a to-be-shaped bit.

In an embodiment, the fifth obtaining unit is further used for:

inputting the received signal into a demodulator to obtain demodulation information; and

inputting the demodulation information into a forward error-correction decoder to obtain the shaped amplitude bit and a first polarity bit; and

inputting the shaped amplitude bit into the de-shaper to obtain the to-be-shaped bit; and

determining the target transmission bit based on the to-be-shaped bit and the first polarity bit.

In an embodiment, the fifth obtaining unit is further used for:
in case that the shaped amplitude bit is a hard-value bit, inputting the shaped amplitude bit into the de-shaper based on a check constraint relationship to obtain the to-be-shaped bit, where the to-be-shaped bit is a hard-value bit corresponding to a syndrome of the channel code.

In an embodiment, the fifth obtaining unit is further used for:
in case that the shaped amplitude bit is a soft-value bit, inputting the shaped amplitude bit into the de-shaper to obtain the to-be-shaped bit, where the de-shaper includes a second decoder of the channel code, and the to-be-shaped bit is a soft-value bit corresponding to a syndrome of the channel code.

In an embodiment, the fifth obtaining unit is further used for:

demodulating and de-shaping the received signal to obtain a second encoded codeword; and

inputting the second encoded codeword into a forward error-correction decoder to obtain the target transmission bit.

In an embodiment, the fifth obtaining unit is further used for:

inputting the received signal into a demodulator to obtain demodulation information; and

in case that the demodulation information is a soft-value bit, inputting the demodulation information into a de-shaper to obtain the second encoded codeword, where the de-shaper includes a second decoder of the channel code, and the second encoded codeword is a soft-value bit corresponding to a syndrome of the channel code.

In an embodiment, the fifth obtaining unit is further used for:

inputting the received signal into a demodulator to obtain demodulation information; and

in case that the demodulation information is a soft-value bit, inputting the demodulation information into a de-shaper to obtain the second encoded codeword, where the de-shaper includes a third decoder of the channel code, and the second encoded codeword is a hard-value bit corresponding to a syndrome of the channel code.

In an embodiment, the fifth obtaining unit is further used for:
obtaining a target transmission bit corresponding to the received signal based on a Turbo iteration process among the demodulator, the de-shaper and the forward error-correction decoder.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted that the above-mentioned apparatus provided by the embodiments of the present application may achieve all the method steps implemented in the above method embodiments, and may achieve the same technical effect. The same parts and beneficial effects as in the method embodiments in this embodiment will not be elaborated in detail.

An embodiment of the present application further provides a processor-readable storage medium, where the processor-readable storage medium stores a computer program for causing a processor to perform the methods provided by the aforementioned embodiments, for example, including:

obtaining a shaped amplitude bit through a first decoder dedicated to a channel code based on a target amplitude probability distribution and a to-be-shaped bit; and

mapping the shaped amplitude bit to a modulation constellation point.

For example, the method includes:

de-shaping a received signal,

where a shaped amplitude bit corresponding to the received signal is obtained by a first decoder dedicated to a channel code based on a target amplitude probability distribution and a to-be-shaped bit.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for mapping probability shaping, applied to a transmitter, comprising:

   obtaining a shaped amplitude bit through a first decoder dedicated to a channel code based on a target amplitude probability distribution and a to-be-shaped bit; and
   mapping the shaped amplitude bit to a modulation constellation point.

2. The method of claim 1, wherein in case that the channel code is a binary channel code, obtaining the shaped amplitude bit through the first decoder dedicated to the channel code based on the target amplitude probability distribution and the to-be-shaped bit comprises:

   determining multiple bit layers, wherein each of the multiple bit layers corresponds to one first decoder;
   obtaining, based on the target amplitude probability distribution and the to-be-shaped bit, a decoded codeword corresponding to each of the multiple bit layers through the first decoder corresponding to each of the multiple bit layers; and
   obtaining the shaped amplitude bit based on the decoded codeword corresponding to the multiple bit layers.

3. The method of claim 2, wherein obtaining, based on the target amplitude probability distribution and the to-be-shaped bit, the decoded codeword corresponding to each of the multiple bit layers through the first decoder corresponding to each of the multiple bit layers comprises:

   determining a code rate corresponding to each of the multiple bit layers based on the target amplitude probability distribution;

determining a syndrome corresponding to each of the multiple bit layers based on the to-be-shaped bit and the code rate corresponding to each of the multiple bit layers; and

obtaining the decoded codeword corresponding to each of the multiple bit layers based on the first decoder corresponding to each of the multiple bit layers and the syndrome corresponding to each of the multiple bit layers.

4. The method of claim 3, wherein obtaining the decoded codeword corresponding to each of the multiple bit layers based on the first decoder corresponding to each of the multiple bit layers and the syndrome corresponding to each of the multiple bit layers comprises:

inputting a syndrome corresponding to a first bit layer among the multiple bit layers into a first decoder corresponding to the first bit layer, to obtain a decoded codeword corresponding to the first bit layer; and

for each target bit layer among the multiple bit layers, inputting a syndrome corresponding to the target bit layer and a first decoded codeword into a first decoder corresponding to the target bit layer to obtain a decoded codeword corresponding to the target bit layer,

wherein the first decoded codeword comprises a decoded codeword corresponding to each of all bit layers before the target bit layer, and the target bit layer is a bit layer other than the first bit layer.

5. The method of claim 3, wherein determining the code rate corresponding to each of the multiple bit layers based on the target amplitude probability distribution comprises:

determining entropy corresponding to an amplitude bit of each of the multiple bit layers based on the target amplitude probability distribution; and

determining the code rate corresponding to each of the multiple bit layers based on entropy corresponding to each of the multiple bit layers.

6. The method of claim 1, wherein in case that the channel code is a nonbinary channel code, obtaining the shaped amplitude bit through the first decoder dedicated to the channel code based on the target amplitude probability distribution and the to-be-shaped bit comprises:

determining a code rate of the nonbinary channel code based on the target amplitude probability distribution;

obtaining, based on the to-be-shaped bit and the code rate of the nonbinary channel code, a nonbinary to-be-shaped bit corresponding to the to-be-shaped bit, wherein the nonbinary to-be-shaped bit is used as a syndrome for the first decoder;

obtaining, through the first decoder, a nonbinary decoded codeword corresponding to the nonbinary to-be-shaped bit based on the nonbinary to-be-shaped bit and the target amplitude probability distribution; and

converting the nonbinary decoded codeword into a binary mode to obtain the shaped amplitude bit.

7. The method of claim 6, wherein determining the code rate of the nonbinary channel code based on the target amplitude probability distribution comprises:

determining entropy corresponding to all amplitude bits based on the target amplitude probability distribution; and

determining the code rate of the nonbinary channel code based on the entropy corresponding to all amplitude bits.

8. The method of any one of claims 1 to 7, wherein the first decoder comprises any one of the following:

a decoder supporting soft input and soft output;

a decoder supporting soft input and hard output; or

a decoder obtained through neural network training.

9. The method of any one of claims 1 to 7, wherein mapping the shaped amplitude bit to the modulation constellation point comprises:

mapping the shaped amplitude bit and a target polarity bit to the modulation constellation point.

10. The method of claim 9, wherein before mapping the shaped amplitude bit to the modulation constellation point, the method further comprises:

obtaining a target transmission bit;

performing serial-to-parallel conversion on the target transmission bit to obtain the to-be-shaped bit and a first polarity bit; and
determining the target polarity bit based on the first polarity bit and the shaped amplitude bit.

11. The method of claim 10, wherein determining the target polarity bit based on the first polarity bit and the shaped amplitude bit comprises:

performing forward error-correction encoding on the first polarity bit and the shaped amplitude bit to obtain a first check bit; and
performing serial-to-parallel conversion on the first check bit and the first polarity bit to obtain the target polarity bit.

12. The method of claim 9, wherein before obtaining the shaped amplitude bit through the first decoder dedicated to the channel code based on the target amplitude probability distribution and the to-be-shaped bit, the method further comprises:

obtaining a target transmission bit;
performing forward error-correction encoding on the target transmission bit to obtain a first encoded codeword; and
performing serial-to-parallel conversion on the first encoded codeword to obtain the to-be-shaped bit and the target polarity bit.

13. A method for receiving and processing probability de-shaping, applied to a receiver, comprising:

de-shaping a received signal,
wherein a shaped amplitude bit corresponding to the received signal is obtained by a first decoder dedicated to a channel code based on a target amplitude probability distribution and a to-be-shaped bit.

14. The method of claim 13, wherein de-shaping the received signal comprises:

inputting the received signal into a demodulator to obtain demodulation information; and
inputting the demodulation information into a forward error-correction decoder to obtain the shaped amplitude bit and a first polarity bit; and
inputting the shaped amplitude bit into a de-shaper to obtain the to-be-shaped bit.

15. The method of claim 14, wherein inputting the shaped amplitude bit into the de-shaper to obtain the to-be-shaped bit comprises:
in case that the shaped amplitude bit is a hard-value bit, inputting the shaped amplitude bit into the de-shaper based on a check constraint relationship to obtain the to-be-shaped bit, wherein the to-be-shaped bit is a hard-value bit corresponding to a syndrome of the channel code.

16. The method of claim 14, wherein inputting the shaped amplitude bit into the de-shaper to obtain the to-be-shaped bit comprises:
in case that the shaped amplitude bit is a soft-value bit, inputting the shaped amplitude bit into the de-shaper to obtain the to-be-shaped bit, wherein the de-shaper comprises a second decoder for the channel code, and the to-be-shaped bit is a soft-value bit corresponding to a syndrome of the channel code.

17. The method of claim 13, wherein de-shaping the received signal comprises:

demodulating and de-shaping the received signal to obtain a second encoded codeword; and
inputting the second encoded codeword into a forward error-correction decoder to obtain a target transmission bit.

18. The method of claim 17, wherein demodulating and de-shaping the received signal to obtain the second encoded codeword comprises:

inputting the received signal into a demodulator to obtain demodulation information; and
in case that the demodulation information is a soft-value bit, inputting the demodulation information into a de-shaper to obtain the second encoded codeword, wherein the de-shaper comprises a second decoder for the channel code, and the second encoded codeword is a soft-value bit corresponding to a syndrome of the channel code.

19. The method of claim 17, wherein demodulating and de-shaping the received signal to obtain the second encoded codeword comprises:

inputting the received signal into a demodulator to obtain demodulation information; and
in case that the demodulation information is a soft-value bit, inputting the demodulation information into a de-shaper to obtain the second encoded codeword, wherein the de-shaper comprises a third decoder for the channel code, and the second encoded codeword is a hard-value bit corresponding to a syndrome of the channel code.

20. The method of claim 16 or 18, wherein de-shaping the received signal comprises:
obtaining a target transmission bit corresponding to the received signal based on a Turbo iteration process among the demodulator, the de-shaper and the forward error-correction decoder.

21. A transmitter, comprising a memory, a transceiver and a processor,
wherein the memory is used for storing a computer program; the transceiver is used for transmitting and receiving data under control of the processor; and the processor is used for reading the computer program in the memory and performing the following operations:

obtaining a shaped amplitude bit through a first decoder dedicated to a channel code based on a target amplitude probability distribution and a to-be-shaped bit; and
mapping the shaped amplitude bit to a modulation constellation point.

22. The transmitter of claim 21, wherein in case that the channel code is a binary channel code, obtaining the shaped amplitude bit through the first decoder dedicated to the channel code based on the target amplitude probability distribution and the to-be-shaped bit comprises:

determining multiple bit layers, wherein each of the multiple bit layers corresponds to one first decoder;
obtaining, based on the target amplitude probability distribution and the to-be-shaped bit, a decoded codeword corresponding to each of the multiple bit layers through the first decoder corresponding to each of the multiple bit layers; and
obtaining the shaped amplitude bit based on the decoded codeword corresponding to each of the multiple bit layers.

23. The transmitter of claim 22, wherein obtaining, based on the target amplitude probability distribution and the to-be-shaped bit, the decoded codeword corresponding to each of the multiple bit layers through the first decoder corresponding to each of the multiple bit layers comprises:

determining a code rate corresponding to each of the multiple bit layers based on the target amplitude probability distribution;
determining a syndrome corresponding to each of the multiple bit layers based on the to-be-shaped bit and the code rate corresponding to each of the multiple bit layers; and
obtaining the decoded codeword corresponding to each of the multiple bit layers based on the first decoder corresponding to each of the multiple bit layers and the syndrome corresponding to each of the multiple bit layers.

24. The transmitter of claim 23, wherein obtaining the decoded codeword corresponding to each of the multiple bit layers based on the first decoder corresponding to each of the multiple bit layers and the syndrome corresponding to each of the multiple bit layers comprises:

inputting a syndrome corresponding to a first bit layer among the multiple bit layers into a first decoder corresponding to the first bit layer, to obtain a decoded codeword corresponding to the first bit layer; and
for each target bit layer among the multiple bit layers, inputting a syndrome corresponding to the target bit layer and a first decoded codeword into a first decoder corresponding to the target bit layer to obtain a decoded codeword corresponding to the target bit layer,
wherein the first decoded codeword comprises a decoded codeword corresponding to each of all bit layers before the target bit layer, and the target bit layer is a bit layer other than the first bit layer.

25. The transmitter of claim 23, wherein determining the code rate corresponding to each of the multiple bit layers based on the target amplitude probability distribution comprises:

determining entropy corresponding to an amplitude bit of each of the multiple bit layers based on the target amplitude probability distribution; and
determining the code rate corresponding to each of the multiple bit layers based on entropy corresponding to each of the multiple bit layers.

26. The transmitter of claim 21, wherein in case that the channel code is a nonbinary channel code, obtaining the shaped amplitude bit through the first decoder dedicated to the channel code based on the target amplitude probability distribution and the to-be-shaped bit comprises:

determining a code rate of the nonbinary channel code based on the target amplitude probability distribution;
obtaining, based on the to-be-shaped bit and the code rate of the nonbinary channel code, a nonbinary to-be-shaped bit corresponding to the to-be-shaped bit, wherein the nonbinary to-be-shaped bit is used as a syndrome for the first decoder;
obtaining, through the first decoder, a nonbinary decoded codeword corresponding to the nonbinary to-be-shaped bit based on the nonbinary to-be-shaped bit and the target amplitude probability distribution; and
converting the nonbinary decoded codeword into a binary mode to obtain the shaped amplitude bit.

27. The transmitter of claim 26, wherein determining the code rate of the nonbinary channel code based on the target amplitude probability distribution comprises:

determining entropy corresponding to all amplitude bits based on the target amplitude probability distribution; and
determining the code rate of the nonbinary channel code based on the entropy corresponding to all amplitude bits.

28. The transmitter of any one of claims 21 to 27, wherein the first decoder comprises any one of the following:

a decoder supporting soft input and soft output;
a decoder supporting soft input and hard output; or
a decoder obtained through neural network training.

29. The transmitter of any one of claims 21 to 27, wherein mapping the shaped amplitude bit to the modulation constellation point comprises:
mapping the shaped amplitude bit and a target polarity bit to the modulation constellation point.

30. The transmitter of claim 29, wherein before mapping the shaped amplitude bit to the modulation constellation point, the operations further comprise:

obtaining a target transmission bit;
performing serial-to-parallel conversion on the target transmission bit to obtain the to-be-shaped bit and a first polarity bit; and
determining the target polarity bit based on the first polarity bit and the shaped amplitude bit.

31. The transmitter of claim 30, wherein determining the target polarity bit based on the first polarity bit and the shaped amplitude bit comprises:

performing forward error-correction encoding on the first polarity bit and the shaped amplitude bit to obtain a first check bit; and
performing serial-to-parallel conversion on the first check bit and the first polarity bit to obtain the target polarity bit.

32. The transmitter of claim 29, wherein before obtaining the shaped amplitude bit through the first decoder dedicated to the channel code based on the target amplitude probability distribution and the to-be-shaped bit, the operations further comprises:

obtaining a target transmission bit;
performing forward error-correction encoding on the target transmission bit to obtain a first encoded codeword; and
performing serial-to-parallel conversion on the first encoded codeword to obtain the to-be-shaped bit and the target polarity bit.

33. A receiver, comprising a memory, a transceiver and a processor,
wherein the memory is used for storing a computer program; the transceiver is used for transmitting and receiving data under control of the processor; and the processor is used for reading the computer program in the memory and performing the following operations:

de-shaping a received signal,
wherein a shaped amplitude bit corresponding to the received signal is obtained by a first decoder dedicated to a channel code based on a target amplitude probability distribution and a to-be-shaped bit.

34. The receiver of claim 33, wherein de-shaping the received signal comprises:

inputting the received signal into a demodulator to obtain demodulation information; and
inputting the demodulation information into a forward error-correction decoder to obtain the shaped amplitude bit and a first polarity bit; and
inputting the shaped amplitude bit into a de-shaper to obtain the to-be-shaped bit.

35. The receiver of claim 34, wherein inputting the shaped amplitude bit into the de-shaper to obtain the to-be-shaped bit comprises:

in case that the shaped amplitude bit is a hard-value bit, inputting the shaped amplitude bit into the de-shaper based on a check constraint relationship to obtain the to-be-shaped bit, wherein the to-be-shaped bit is a hard-value bit corresponding to a syndrome of the channel code.

36. The receiver of claim 34, wherein inputting the shaped amplitude bit into the de-shaper to obtain the to-be-shaped bit comprises:

in case that the shaped amplitude bit is a soft-value bit, inputting the shaped amplitude bit into the de-shaper to obtain the to-be-shaped bit, wherein the de-shaper comprises a second decoder for the channel code, and the to-be-shaped bit is a soft-value bit corresponding to a syndrome of the channel code.

37. The receiver of claim 33, wherein de-shaping the received signal comprises:

demodulating and de-shaping the received signal to obtain a second encoded codeword; and
inputting the second encoded codeword into a forward error-correction decoder to obtain a target transmission bit.

38. The receiver of claim 37, wherein demodulating and de-shaping the received signal to obtain the second encoded codeword comprises:

inputting the received signal into a demodulator to obtain demodulation information; and
in case that the demodulation information is a soft-value bit, inputting the demodulation information into a de-shaper to obtain the second encoded codeword, wherein the de-shaper comprises a second decoder for the channel code, and the second encoded codeword is a soft-value bit corresponding to a syndrome of the channel code.

39. The receiver of claim 37, wherein demodulating and de-shaping the received signal to obtain the second encoded codeword comprises:

inputting the received signal into a demodulator to obtain demodulation information; and
in case that the demodulation information is a soft-value bit, inputting the demodulation information into a de-shaper to obtain the second encoded codeword, wherein the de-shaper comprises a third decoder for the channel code, and the second encoded codeword is a hard-value bit corresponding to a syndrome of the channel code.

40. The receiver of claim 36 or 38, wherein de-shaping the received signal comprises:
obtaining a target transmission bit corresponding to the received signal based on a Turbo iteration process among the demodulator, the de-shaper and the forward error-correction decoder.

**41.** An apparatus for mapping probability shaping, applied to a transmitter, comprising:

a first obtaining unit, used for obtaining a shaped amplitude bit through a first decoder dedicated to a channel code based on a target amplitude probability distribution and a to-be-shaped bit; and
a second obtaining unit, used for mapping the shaped amplitude bit to a modulation constellation point.

**42.** The apparatus of claim 41, wherein in case that the channel code is a binary channel code, the first obtaining unit is further used for:

determining multiple bit layers, wherein each of the multiple bit layers corresponds to one first decoder;
obtaining, based on the target amplitude probability distribution and the to-be-shaped bit, a decoded codeword corresponding to each of the multiple bit layers through the first decoder corresponding to each of the multiple bit layers; and
obtaining the shaped amplitude bit based on the decoded codeword corresponding to each of the multiple bit layers.

**43.** The apparatus of claim 42, wherein the first obtaining unit is further used for:

determining a code rate corresponding to each of the multiple bit layers based on the target amplitude probability distribution;
determining a syndrome corresponding to each of the multiple bit layers based on the to-be-shaped bit and the code rate corresponding to each of the multiple bit layers; and
obtaining the decoded codeword corresponding to each of the multiple bit layers based on the first decoder corresponding to each of the multiple bit layers and the syndrome corresponding to each of the multiple bit layers; and
obtaining the shaped amplitude bit based on the decoded codeword corresponding to each of the multiple bit layers.

**44.** The apparatus of claim 43, wherein the first obtaining unit is further used for:

inputting a syndrome corresponding to a first bit layer among the multiple bit layers into a first decoder corresponding to the first bit layer, to obtain a decoded codeword corresponding to the first bit layer; and
for each target bit layer among the multiple bit layers, inputting a syndrome corresponding to the target bit layer and a first decoded codeword into a first decoder corresponding to the target bit layer to obtain a decoded codeword corresponding to the target bit layer,
wherein the first decoded codeword comprises a decoded codeword corresponding to each of all bit layers before the target bit layer, and the target bit layer is a bit layer other than the first bit layer.

**45.** The apparatus of claim 43, wherein the first obtaining unit is further used for:

determining entropy corresponding to an amplitude bit of each layer in the multiple bit layers based on the target amplitude probability distribution; and
determining the code rate corresponding to each of the multiple bit layers based on entropy corresponding to each of the multiple bit layers.

**46.** The apparatus of claim 41, wherein in case that the channel code is a nonbinary channel code, the first obtaining unit is further used for:

determining a code rate of the nonbinary channel code based on the target amplitude probability distribution;
obtaining, based on the to-be-shaped bit and the code rate of the nonbinary channel code, a nonbinary to-be-shaped bit corresponding to the to-be-shaped bit, wherein the nonbinary to-be-shaped bit is used as a syndrome for the first decoder;
obtaining, through the first decoder, a nonbinary decoded codeword corresponding to the nonbinary to-be-shaped bit based on the nonbinary to-be-shaped bit and the target amplitude probability distribution; and
converting the nonbinary decoded codeword into a binary mode to obtain the shaped amplitude bit.

**47.** The apparatus of claim 46, wherein the first obtaining unit is further used for:

determining entropy corresponding to all amplitude bits based on the target amplitude probability distribution; and
determining the code rate of the nonbinary channel code based on the entropy corresponding to all amplitude bits.

48. The apparatus of any one of claims 41 to 47, wherein the first decoder comprises any one of the following:

a decoder supporting soft input and soft output;
a decoder supporting soft input and hard output; or
a decoder obtained through neural network training.

49. The apparatus of any one of claims 41 to 47, wherein the second obtaining unit is further used for:
mapping the shaped amplitude bit and a target polarity bit to the modulation constellation point.

50. The apparatus of claim 49, wherein the apparatus further comprises a third obtaining unit, and before mapping the shaped amplitude bit to the modulation constellation point, the third obtaining unit is used for:

obtaining a target transmission bit;
performing serial-to-parallel conversion on the target transmission bit to obtain the to-be-shaped bit and a first polarity bit; and
determining the target polarity bit based on the first polarity bit and the shaped amplitude bit.

51. The apparatus of claim 50, wherein the third obtaining unit is further used for:

performing forward error-correction encoding on the first polarity bit and the shaped amplitude bit to obtain a first check bit; and
performing serial-to-parallel conversion on the first check bit and the first polarity bit to obtain the target polarity bit.

52. The apparatus of claim 49, wherein the apparatus further comprises a fourth obtaining unit, and before obtaining the shaped amplitude bit through the first decoder dedicated to the channel code based on the target amplitude probability distribution and the to-be-shaped bit, the fourth obtaining unit is used for:

obtaining a target transmission bit;
performing forward error-correction encoding on the target transmission bit to obtain a first encoded codeword; and
performing serial-to-parallel conversion on the first encoded codeword to obtain the to-be-shaped bit and the target polarity bit.

53. An apparatus for receiving and processing probability de-shaping, applied to a receiver, comprising:

a fifth obtaining unit, used for de-shaping a received signal,
wherein a shaped amplitude bit corresponding to the received signal is obtained by a first decoder dedicated to a channel code based on a target amplitude probability distribution and a to-be-shaped bit.

54. The apparatus of claim 53, wherein the fifth obtaining unit is further used for:

inputting the received signal into a demodulator to obtain demodulation information; and
inputting the demodulation information into a forward error-correction decoder to obtain the shaped amplitude bit and a first polarity bit; and
inputting the shaped amplitude bit into a de-shaper to obtain the to-be-shaped bit.

55. The apparatus of claim 54, wherein the fifth obtaining unit is further used for:
in case that the shaped amplitude bit is a hard-value bit, inputting the shaped amplitude bit into the de-shaper based on a check constraint relationship to obtain the to-be-shaped bit, wherein the to-be-shaped bit is a hard-value bit corresponding to a syndrome of the channel code.

56. The apparatus of claim 54, wherein the fifth obtaining unit is further used for:
in case that the shaped amplitude bit is a soft-value bit, inputting the shaped amplitude bit into the de-shaper to obtain the to-be-shaped bit, wherein the de-shaper comprises a second decoder for the channel code, and the to-be-shaped bit is a soft-value bit corresponding to a syndrome of the channel code.

**57.** The apparatus of claim 53, wherein the fifth obtaining unit is further used for:

demodulating and de-shaping the received signal to obtain a second encoded codeword; and
inputting the second encoded codeword into a forward error-correction decoder to obtain a target transmission bit.

**58.** The apparatus of claim 57, wherein the fifth obtaining unit is further used for:

inputting the received signal into a demodulator to obtain demodulation information; and
in case that the demodulation information is a soft-value bit, inputting the demodulation information into a de-shaper to obtain the second encoded codeword, wherein the de-shaper comprises a second decoder for the channel code, and the second encoded codeword is a soft-value bit corresponding to a syndrome of the channel code.

**59.** The apparatus of claim 57, wherein the fifth obtaining unit is further used for:

inputting the received signal into a demodulator to obtain demodulation information; and
in case that the demodulation information is a soft-value bit, inputting the demodulation information into a de-shaper to obtain the second encoded codeword, wherein the de-shaper comprises a third decoder for the channel code, and the second encoded codeword is a hard-value bit corresponding to a syndrome of the channel code.

**60.** The apparatus of claim 56 or 58, wherein the fifth obtaining unit is further used for:
obtaining a target transmission bit corresponding to the received signal based on a Turbo iteration process among the demodulator, the de-shaper and the forward error-correction decoder.

**61.** A processor-readable storage medium, wherein the processor-readable storage medium stores a computer program for causing a processor to perform the method of any one of claims 1 to 12 or the method of any one of claims 13 to 20.

Binary bit stream

Downlink: user side
Uplink: network side

De-shaping

SFEC decoding

Demo-dulation

Channel

Downlink: network side
Uplink: user side

Probability amplitude shaping

ASK modul-Ation BRGC

Parallel-to-serial conve-rsion

S

P

SFEC

Us

Us

A

Sha-per

Ua

Serial-to-parallel conve-rsion

Binary bit stream

FIG. 1

50

| 111 | 110 | 100 | 101 | 001 | 000 | 010 | 011 |
| --- | --- | --- | --- | --- | --- | --- | --- |
| ○ | ○ | ○ | ○ | ○ | ○ | ○ | ○ |
| -7 | -5 | -3 | -1 | +1 | +3 | +5 | +7 |

FIG. 2

Obtaining a shaped amplitude bit through a first decoder dedicated to a channel code based on a target amplitude probability distribution and a to-be-shaped bit — 301

Mapping the shaped amplitude bit to a modulation constellation point — 302

FIG. 3

FIG. 4

$U_a$ → Binary to nonbinary → $V_a$ → Nonbinary channel decoding → $V$ → Nonbinary to binary → $A$

$P_A$ →

FIG. 5

FIG. 6

Start

De-shaping a received signal, where a shaped amplitude bit corresponding to the received signal is obtained by a first decoder dedicated to a channel code based on a target amplitude probability distribution and a to-be-shaped bit

701

FIG. 7

FIG. 8

FIG. 9

FIG. 10

FIG. 11

FIG. 12

FIG. 13

1400

Apparatus for mapping probability shaping

1401

First obtaining unit

1402

Second obtaining unit

FIG. 14

1500

Apparatus for receiving and processing probability de-shaping

1501

Fifth obtaining unit

FIG. 15

## INTERNATIONAL SEARCH REPORT

| International application No. |
| --- |
| **PCT/CN2022/134093** |

**A.    CLASSIFICATION OF SUBJECT MATTER**

H04L 27/34(2006.01)i;H04L 27/36(2006.01)n;H04L 27/38(2006.01)n

According to International Patent Classification (IPC) or to both national classification and IPC

**B.    FIELDS SEARCHED**

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, JPTXT, 3GPP, IEEE, IETF, EPONPL: 概率成型, 幅度, 译码, 编码, 映射, 星座, 比特, 二进制, 信道码, 奇偶校验, 码率, 熵, 极性, 串并, 前向纠错, 解调, 解成型, probability shaping, amplitude, decode, encode, code, map, constellation, bit, binary, channel code, LDPC, code rate, entropy, polar, serial, parallel, FEC, demodulat, deshaper

**C.    DOCUMENTS CONSIDERED TO BE RELEVANT**

| Category* | Citation of document, with indication, where appropriate, of the relevant passages | Relevant to claim No. |
| --- | --- | --- |
| X | US 10091046 B1 (NOKIA TECHNOLOGIES OY) 02 October 2018 (2018-10-02) <br> see description, column 1, line 59-column 2, line 40, and figures 5-9 | 1, 8, 13, 14, 17, 21, 28, 33, 34, 37, 41, 48, 53, 54, 57, 61 |
| A | US 10091046 B1 (NOKIA TECHNOLOGIES OY) 02 October 2018 (2018-10-02) <br> see description, column 1, line 59-column 2, line 40, and figures 5-9 | 2-7, 9-12, 15, 16, 18-20, 22-27, 29-32, 35, 36, 38-40, 42-47, 49-52, 55, 56, 58-60 |
| X | CN 112600568 A (TIANJIN UNIVERSITY) 02 April 2021 (2021-04-02) <br> see description, paragraphs [0005]-[0029] | 1, 8, 13, 14, 17, 21, 28, 33, 34, 37, 41, 48, 53, 54, 57, 61 |
| A | CN 112600568 A (TIANJIN UNIVERSITY) 02 April 2021 (2021-04-02) <br> see description, paragraphs [0005]-[0029] | 2-7, 9-12, 15, 16, 18-20, 22-27, 29-32, 35, 36, 38-40, 42-47, 49-52, 55, 56, 58-60 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 February 2023** | **22 February 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/134093**

**C. DOCUMENTS CONSIDERED TO BE RELEVANT**

| Category* | Citation of document, with indication, where appropriate, of the relevant passages | Relevant to claim No. |
|---|---|---|
| A | CN 108809375 A (SHANGHAI JIAO TONG UNIVERSITY) 13 November 2018 (2018-11-13)<br>see entire document | 1-61 |
| A | US 2019280809 A1 (NOKIA SOLUTIONS AND NETWORKS OY) 12 September 2019 (2019-09-12)<br>see entire document | 1-61 |

Form PCT/ISA/210 (second sheet) (July 2022)

**INTERNATIONAL SEARCH REPORT**
Information on patent family members

International application No.

**PCT/CN2022/134093**

| Patent document cited in search report | | | Publication date (day/month/year) | Patent family member(s) | | | Publication date (day/month/year) |
|---|---|---|---|---|---|---|---|
| US | 10091046 | B1 | 02 October 2018 | WO | 2019096895 | A1 | 23 May 2019 |
| CN | 112600568 | A | 02 April 2021 | None | | | |
| CN | 108809375 | A | 13 November 2018 | None | | | |
| US | 2019280809 | A1 | 12 September 2019 | US | 10972215 | B2 | 06 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210190613